(19) Europäisches Patentamt
European Patent Office
Office européen des brevets

(11) **EP 4 660 954 A1**

(12) **EUROPEAN PATENT APPLICATION**
published in accordance with Art. 153(4) EPC

(43) Date of publication:
**10.12.2025 Bulletin 2025/50**

(21) Application number: **24844352.5**

(22) Date of filing: **20.05.2024**

(51) International Patent Classification (IPC):
*G06T 15/00* (2011.01)

(52) Cooperative Patent Classification (CPC):
**G06T 11/40; G06T 15/00; G06T 15/04; G06T 15/20; G06T 15/30**

(86) International application number:
**PCT/CN2024/094298**

(87) International publication number:
**WO 2025/020657 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.07.2023 CN 202310912098**

(71) Applicant: **Tencent Technology (Shenzhen) Company Limited**
**Shenzhen, Guangdong 518057 (CN)**

(72) Inventor: **QI, Yue**
**Shenzhen, Guangdong 518057 (CN)**

(74) Representative: **Gunzelmann, Rainer et al**
**Wuesthoff & Wuesthoff**
**Patentanwälte und Rechtsanwalt PartG mbB**
**Schweigerstraße 2**
**81541 München (DE)**

(54) **IMAGE DISPLAY METHOD FOR VIRTUAL SCENE, DEVICE, MEDIUM AND PROGRAM PRODUCT**

(57) An image display method for a virtual scene, a device, a medium, and a program product are provided, relating to the technical field of virtual worlds. The method includes: acquiring (210) a first scene depth texture map and a first scene color texture map of a first image frame; acquiring (220), based on the first scene depth texture map, a first spatial position of a vertex of a target triangular surface in a first clipping space; mapping (230), based on a first camera parameter and a second camera parameter, the first spatial position to a second spatial position in a second clipping space; generating (240) a second scene depth texture map and a second scene color texture map based on the second spatial position and the first scene color texture map; and displaying (250) a second image frame based on the second scene depth texture map and the second scene color texture map. According to the foregoing solution, an image display frame rate for the virtual scene may be improved, thereby improving the display effect of the virtual scene.

Acquire a first scene depth texture map and a first scene color texture map of a first image frame, the first image frame being an image frame generated by drawing and rendering a virtual scene — 210

Acquire, based on the first scene depth texture map, a first spatial position of a vertex of a target triangular surface in a first clipping space, the target triangular surface being a triangular surface of a first scene object in the first image frame, and the first clipping space being a clipping space corresponding to a first camera parameter of the first image frame — 220

Map, based on the first camera parameter and a second camera parameter, the first spatial position to a second spatial position in a second clipping space, the second clipping space being a clipping space corresponding to the second camera parameter — 230

Generate a second scene depth texture map and a second scene color texture map based on the second spatial position and the first scene color texture map — 240

Display the second image frame based on the second scene depth texture map and the second scene color texture map — 250

FIG. 2

**EP 4 660 954 A1**

**Description**

RELATED APPLICATION

This application claims priority to Chinese Patent Application No. 202310912098.7, entitled "IMAGE DISPLAY METHOD FOR VIRTUAL SCENE, DEVICE, MEDIUM, AND PROGRAM PRODUCT" and filed on July 21, 2023, which is incorporated herein by reference in its entirety.

FIELD OF THE TECHNOLOGY

This application relates to the technical field of virtual worlds, and in particular, to an image display method for a virtual scene, a device, a medium, and a program product.

BACKGROUND OF THE DISCLOSURE

An application program that may display (or provide) a virtual scene generally renders an element or an object in the virtual scene into a two-dimensional (2D) image and displays the rendered 2D image on a screen to present the virtual scene to the user.

In the related art, the display effect of the virtual scene is related to a frame rate of image rendering. A higher frame rate indicates a better display effect of the virtual scene. Otherwise, a lower frame rate indicates a worse display effect of the virtual scene.

However, in a case that a display frame rate of an image corresponding to the virtual scene is relatively high, image rendering needs to have a relatively high terminal processing capability, which is limited by the processing performance of a terminal device. Many terminal devices cannot support image display with a high frame rate, resulting in a limited display effect of the virtual scene.

SUMMARY

Various embodiments of this application provide an image display method for a virtual scene, a device, a medium, and a program product. The technical solutions are as follows.

According to an aspect of this application, an image display method for a virtual scene is provided, including the following operations:

  acquiring a first scene depth texture map and a first scene color texture map of a first image frame, the first image frame being generated by rendering the virtual scene;

  acquiring, based on the first scene depth texture map, a first spatial position of a vertex of a target triangular surface in a first clipping space, the target triangular surface being a triangular surface of a first scene object in the first image frame, and the first clipping space corresponding to a first camera parameter of the first image frame;

  mapping, based on the first camera parameter and a second camera parameter, the first spatial position to a second spatial position in a second clipping space, the second clipping space corresponding to the second camera parameter;

  generating a second scene depth texture map and a second scene color texture map based on the second spatial position and the first scene color texture map; and

  a second image frame being displayed based on the second scene depth texture map and the second scene color texture map.

According to another aspect of this application, an image display apparatus for a virtual scene is provided, including:

  a first texture acquisition module configured to acquire a first scene depth texture map and a first scene color texture map of a first image frame, the first image frame being generated by rendering the virtual scene;

  a first position acquisition module configured to acquire, based on the first scene depth texture map, a first spatial position of a vertex of a target triangular surface in a first clipping space, the target triangular surface being a triangular surface of a first scene object in the first image frame, and the first clipping space corresponding to a first camera parameter of the first image frame;

a second position acquisition module configured to map, based on the first camera parameter and a second camera parameter, the first spatial position to a second spatial position in a second clipping space, the second clipping space corresponding to the second camera parameter;

a second texture acquisition module configured to generate a second scene depth texture map and a second scene color texture map based on the second spatial position and the first scene color texture map; and

an image display module configured to display a second image frame based on the second scene depth texture map and the second scene color texture map.

In another aspect, a computer device is provided, including a processor and a memory. The memory has at least one computer program stored therein, and the at least one computer program is loaded and executed by the processor to implement the foregoing image display method for a virtual scene.

In yet another aspect, a computer-readable storage medium is provided, having at least one computer program stored therein, and the computer program being loaded and executed by a processor to implement the foregoing image display method for a virtual scene.

In still another aspect, a computer program product is provided, including a computer program, the computer program being stored in a computer-readable storage medium. A processor of a computer device reads the computer program from the computer-readable storage medium and executes the computer program to cause the computer device to perform the foregoing image display method for a virtual scene.

The technical solutions provided in this application have at least the following beneficial effects.

After the first scene depth texture map and the first scene color texture map (i.e., a rendering result) of the first image frame are acquired, a first spatial position of a vertex of a triangular surface of a target scene object in the first image frame in the first clipping space may be acquired based on the first scene depth texture map, the first spatial position is mapped to the second spatial position based on the first spatial position, the first camera parameter corresponding to the first image frame, and the second camera parameter, and then the second scene depth texture map and the second scene color texture map of the second image frame are generated based on the second spatial position and the first scene color texture map to display the second image frame. In the foregoing solution, after the first image frame of the virtual scene is drawn, for the first scene object in the first image frame, a pixel position, depth, and color that correspond to the first scene object in the second image frame may be obtained through space mapping and camera parameter-based prediction. The second image frame does not need to be redrawn and rendered for the first scene object, thereby greatly reducing the workload of drawing and rendering the second image frame, and further reducing processing resources occupied by the image display of the virtual scene. In addition, before a new image frame after the first image frame is rendered, the acquired second image frame may be directly rendered. There is no need to wait for a rendering result of the new image frame to acquire and render the second image frame, thereby effectively improving an image display frame rate for the virtual scene, and further improving the display effect of the virtual scene.

BRIEF DESCRIPTION OF THE DRAWINGS

FIG. 1 is a structural block diagram of a computer system according to an embodiment of this application.

FIG. 2 is a flowchart of an image display method for a virtual scene according to an embodiment of this application.

FIG. 3 is a framework diagram of an image prediction process according to an embodiment of this application.

FIG. 4 is a flowchart of an image display method for a virtual scene according to another embodiment of this application.

FIG. 5 is a schematic diagram of a screen space aggregated mesh in a scene depth according to an embodiment of this application.

FIG. 6 is a schematic diagram of a screen space aggregated mesh in a scene color according to an embodiment of this application.

FIG. 7 is a flowchart of an image display method for a virtual scene according to another embodiment of this application.

FIG. 8 is an implementation framework diagram of frame prediction according to an embodiment of this application.

FIG. 9 is a schematic diagram of a process of outputting vertex information according to an embodiment of this application.

FIG. 10 is a schematic diagram of a process of outputting a spatial position and UV coordinates of a pixel according to an embodiment of this application.

FIG. 11 is a schematic diagram of a process of outputting a depth and a color according to an embodiment of this application.

FIG. 12 is a scene color diagram of frame prediction output according to an embodiment of this application.

FIG. 13 is an on-screen timing diagram according to an embodiment of this application.

FIG. 14 is a basic structural diagram of a "paired render pipeline" according to an embodiment of this application.

FIG. 15 is a basic structural diagram of a "paired render pipeline" according to another embodiment of this application.

FIG. 16 is a basic structural diagram of a render pipeline for interpolating an intermediate frame in a render thread according to an embodiment of this application.

FIG. 17 is a structural block diagram of an image display apparatus for a virtual scene according to an embodiment of this application.

FIG. 18 is a structural block diagram of a computer device according to an embodiment of this application.

DESCRIPTION OF EMBODIMENTS

To make the objectives, technical solutions, and advantages of this application clearer, the following further describes implementations of this application in detail with reference to the accompanying drawings.

Exemplary embodiments are described in detail herein, and examples of the exemplary embodiments are shown in the accompanying drawings. When the following description involves the accompanying drawings, unless otherwise indicated, the same numerals in different accompanying drawings represent the same or similar elements. The implementations described in the following exemplary embodiments do not represent all implementations consistent with this application. On the contrary, the implementations are merely examples of an apparatus and a method that are consistent with some aspects of this application described in detail in claims.

The terms used in this application are merely intended to describe specific embodiments, but are not intended to limit this application. As used in this application and the appended claims, the singular forms "a", "the", and "this" are intended to include the plural forms as well, unless the context clearly indicates otherwise. The term "and/or" used in this application refers to and contains any or all possible combinations of one or more associated listed items.

According to the embodiments of this application, before and during acquiring data related to the user, a prompt interface or a pop-up window may be displayed, or voice prompt information may be outputted. The prompt interface, the pop-up window, or the voice prompt information is configured for prompting the user that data related to the user is currently being acquired so that in this application, related operations of acquiring the data related to the user are performed only after a confirmation operation of the user for the prompt interface or the pop-up window is acquired, otherwise (that is, when the confirmation operation of the user for the prompt interface or the pop-up window is not acquired), the related operations of acquiring the data related to the user are ended, that is, the data related to the user is not acquired. In other words, all user data acquired in this application is strictly processed according to the requirements of relevant national laws and regulations. The informed consent or independent consent of a subject of personal information is acquired with consent and authorization of the user within the scope of authorization of the laws and regulations and the subject of the personal information. Subsequent data use and processing, and acquisition, use, and processing of the relevant user data are required to comply with relevant laws, regulations, and standards of relevant countries and regions. For example, a virtual scene, a scene object, an image frame, and the like involved in this application are all acquired with sufficient authorization.

Although the terms such as "first" and "second" may be used in this application to describe various information, the information is not to be limited to these terms. These terms are merely intended to distinguish information of the same type. For example, without departing from the scope of this application, a first parameter may alternatively be referred to as a second parameter. Similarly, a second parameter may alternatively be referred to as a first parameter. Depending on the context, for example, the word "if" used herein may be interpreted as "while", "when", or "in response to determining".

For convenience of understanding, some nouns involved in this application are simply described below.

1) Virtual scene: the virtual scene is a virtual scene displayed (or provided) when an application program runs on a terminal. The virtual scene may be a simulated environment scene of the real world, a semi-simulated and semi-fictitious three-dimensional (3D) environment scene, or a purely fictitious 3D environment scene. The virtual scene may be at least one of the following: a 2D virtual scene, a 2.5 -dimensional virtual scene, and a 3D virtual scene. The following embodiments are described using an example in which the virtual scene is the 3D virtual scene. This is not limited thereto. In some embodiments, the virtual scene may further be configured for a virtual scene battle between at least two virtual characters. In some embodiments, the virtual scene may further be configured for battling between at least two virtual characters using virtual props. In some embodiments, the virtual scene may further be configured for battling between at least two virtual characters using virtual props within a target region range, and the target region range will continuously decrease over time in the virtual scene. This is not limited in the embodiments of this application.

The virtual scene is usually generated by an application program in a computer device such as a terminal device and is displayed based on hardware (such as a screen) in the terminal device. The terminal device may be a mobile terminal, such as a smartphone, a tablet computer, an e-book reader, a moving picture experts group audio layer III (MP3) player, a moving picture experts group audio layer IV (MP4) player, an intelligent robot, an in-vehicle terminal, and a laptop portable computer. Alternatively, the terminal device may be a personal computer device of a notebook computer or a stationary computer. This is not limited in the embodiments of this application.

2) Render pipeline: in computer graphics and game development, a processing unit configured to convert 3D scene data (i.e., data configured for describing the 3D virtual scene) into a 2D image may be referred to as a render pipeline.

3) On-screen: it refers to a process in which after completing all rendering of a frame (such as an image frame or a video frame), a computer presents a rendering result of the frame on a display device (such as a display or a projector) so that the rendering result may be viewed by the user.

4) Vertical synchronization: after the software invokes an on-screen instruction, the rendering result needs some time to be displayed on the display device. Therefore, the vertical synchronization may be configured for preventing the software from invoking the on-screen instruction again before the display device completes the presentation, so that the software enters a waiting state until the current presentation is completed, to ensure that the current presentation is completed when the on-screen instruction takes effect next time. Due to the existence of the vertical synchronization mechanism, an interval between frames is certainly not less than a waiting time of vertical synchronization of a device.

5) Homogeneous coordinate: the homogeneous coordinate is a coordinate representation method used in geometry, computer graphics, and many other fields. In a homogeneous coordinate system, a point in an n-dimensional space is represented using a point in an (n+1)-dimensional space. For example, in a 3D space, a point is usually represented by three coordinates $[x, y, z]^T$, but in the homogeneous coordinate system, the point will be represented by four coordinates $[x, y, z, w]^T$, where w is a homogeneous coordinate. It allows using a matrix to represent and process affine transformation (such as translation, rotation, and scaling) and perspective projection. In a non-homogeneous coordinate system, translation cannot be represented through matrix multiplication, which makes the combination and application of transformations more complex. However, in the homogeneous coordinate system, all these transformations may be represented through matrix multiplication, which makes the combination and application of the transformations simpler. In this application, all coordinates that use the transformation matrix to perform coordinate space transformation are homogeneous coordinates.

6) Model matrix (M matrix): the matrix describes a position, a direction, and a size of a 3D model in the world and is responsible for converting a coordinate from a local space (alternatively referred to as an object space) to a world space. In other words, after a coordinate value in the local space is multiplied by the M matrix, a corresponding coordinate in the world space may be obtained.

7) View matrix (V matrix): the matrix describes a position and a direction of a camera (or an observer) in the world and is responsible for converting a coordinate from the world space to a view space (alternatively referred to as a camera space). In other words, after a coordinate value in the world space is multiplied by the V matrix, a corresponding coordinate in the view space may be obtained.

8) Projection matrix (P matrix): the matrix is responsible for defining how to map a 3D world to a 2D screen and convert a coordinate from the view space to a clipping space of the screen. In other words, after a coordinate value in the view space is multiplied by the P matrix, a corresponding coordinate in the clipping space may be obtained.

9) Scene color (SceneColor): it refers to color information of pixels in a frame buffer after an object in a scene is drawn in a rendering process, and the frame buffer is configured to buffer a frame.

10) Scene depth (SceneDepth): it refers to depth information of pixels in a frame buffer after an object in a scene is drawn in a rendering process, i.e., distance information of the pixel to a camera (for example, a virtual camera configured to observe a virtual scene).

11) Compute shader (CS) pass: it refers to a process of invoking a graphics processing unit (GPU) through a CS to perform the operations specified in the shader and output a result.

12) Mesh pass: it refers to a process in which a central processing unit (CPU) draws mesh data as a series of pixels by sequentially performing processes such as vertex shading, rasterization, pixel shading, and depth testing.

13) UV coordinates: in computer graphics, UV coordinates are a method for representing 2D texture coordinates. In a UV coordinate system, the U-axis represents a horizontal direction, and the V-axis represents a vertical direction. The UV coordinates usually range from 0 to 1, where (0, 0) represents an upper left corner of the texture, and (1, 1) represents a lower right corner of the texture.

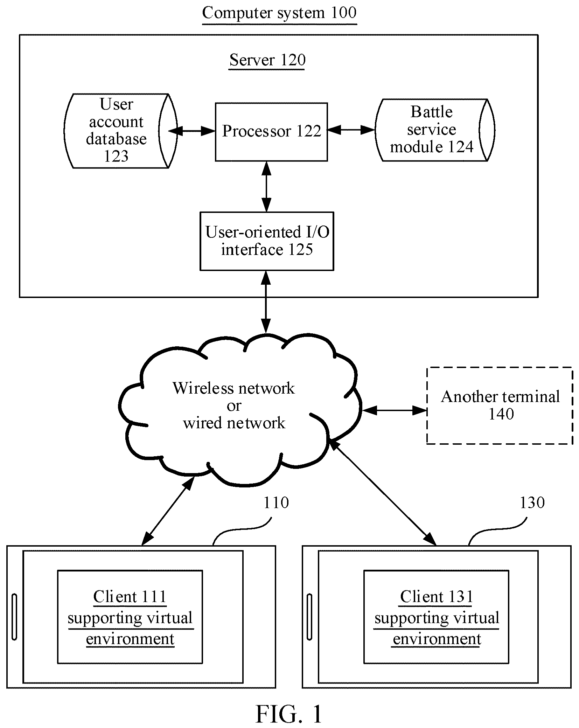

FIG. 1 is a structural block diagram of a computer system according to an embodiment of this application. The computer system 100 includes: a first terminal 110, a server 120, and a second terminal 130.

A client 111 supporting a virtual scene is installed and run on the first terminal 110. The client 111 may be a client of a target application program. When the first terminal runs the client 111, a user interface of the client 111 is displayed on a screen of the first terminal 110. The user interface may be configured to present a virtual scene, for example, present an image frame corresponding to the virtual scene. The foregoing target application program may be at least one of the following: a multiplayer online battle game, a simulation program, a battle royale shooting game, a virtual reality (VR) application program, an augmented reality (AR) program, a 3D map program, a VR game, an AR game, a first-person shooting (FPS) game, a multiplayer gunfight survival game, a third-person shooting (TPS) game, a multiplayer online battle arena (MOBA) game, a simulation game (SLG), a social application program, and an interactive entertainment application program.

A client 131 supporting a virtual scene is installed and run on the second terminal 130. The client 131 may be a client of the foregoing target application program (for example, the multiplayer online battle game). When the second terminal 130 runs the client 131, a user interface of the client 131 is displayed on a screen of the second terminal 130.

In some embodiments, the clients installed on the first terminal 110 and the second terminal 130 are the same, or the clients installed on the two terminals are the same type of clients on different operating system platforms (Android or IOS). The first terminal 110 may generally refer to one of a plurality of terminals, and the second terminal 130 may generally refer to another one of the plurality of terminals. In this embodiment, only the first terminal 110 and the second terminal 130 are used as examples for description. Device types of the first terminal 110 and the second terminal 130 are the same or different. The device types include: at least one of a smartphone, a tablet computer, an e-book reader, an MP3 player, an MP4 player, a laptop portable computer, and a desktop computer. The terminal in the embodiments of this application may further be referred to as a terminal device.

FIG. 1 only shows two terminals. However, in different embodiments, there may be a plurality of another terminals 140 that may access the server 120. In some embodiments, there are alternatively one or more terminals 140 that correspond to a developer. A development and editing platform for a client that supports a virtual scene is installed on the terminal 140. The developer may edit and update the client on the terminal 140, and transmit an updated client installation package to the server 120 through a wired network or wireless network. The first terminal 110 and the second terminal 130 may download the client installation package from the server 120 to update the client.

The first terminal 110, the second terminal 130, and another terminal 140 are connected to the server 120 through the wireless network or wired network.

The server 120 includes at least one of one server, a plurality of servers, a cloud computing platform, and a virtualization center. The server 120 is configured to provide a backend service for a client that supports the 3D virtual scene. In some embodiments, the server 120 undertakes primary computing work, and the terminal undertakes secondary computing work. Alternatively, the server 120 undertakes the secondary computing work, and the terminal undertakes the primary computing work. Alternatively, a distributed computing architecture is used between the server 120 and the terminal to perform collaborative computing.

In a schematic example, the server 120 includes a processor 122, a user account database 123, a battle service module 124, and a user-oriented input/output (I/O) interface 125. The processor 122 is configured to load instructions stored in the server 120, and process data in the user account database 123 and the battle service module 124. The user account database 123 is configured to store data of user accounts used by the first terminal 110, the second terminal 130, and another terminal 140, such as avatars of the user accounts, nicknames of the user accounts, battle strength indexes of the user accounts, and service areas of the user accounts. The battle service module 124 is configured to provide a plurality of battle rooms for users to battle, such as a 1V1 battle, a 3V3 battle, or a 5V5 battle. The user-oriented I/O interface 125 is configured to establish communication with the first terminal 110 or the second terminal 130 through the wireless network or wired network to exchange data.

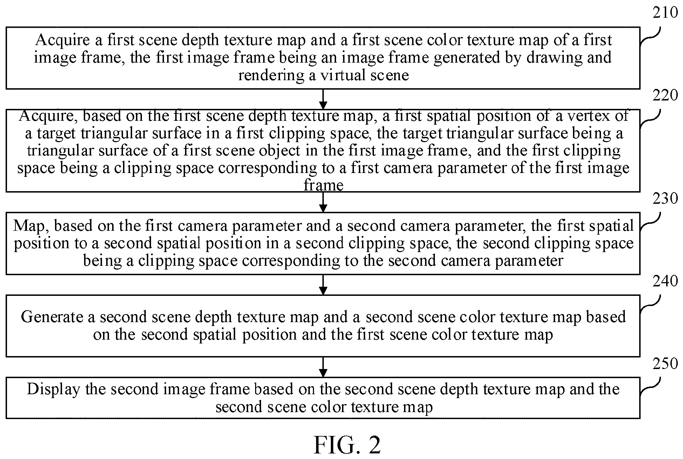

FIG. 2 is a flowchart of an image display method for a virtual scene according to an embodiment of this application. The method may be performed by a computer device. The computer device may be the first terminal 110 and the second terminal 130 in the system shown in FIG. 1. Alternatively, the computer device may be the server 120 in the system shown in FIG. 1. Alternatively, the computer device may contain the first terminal 110, the server 120, and the second terminal 130 in the system shown in FIG. 1. The method includes the following operations.

**Operation 210:** Acquire a first scene depth texture map and a first scene color texture map of a first image frame, the first image frame being generated by rendering the virtual scene.

In this embodiment of this application, the foregoing rendering (namely, drawing and rendering) the virtual scene refers to a process of mapping a scene object in the virtual scene from a 3D model to a 2D image through rendering. That is, the first image frame is a 2D image for the virtual scene that is completely generated through rendering.

For example, the first image frame is an image frame generated after the computer device sequentially rasterizes and colors a triangular surface of an unblocked model in a view frustum and outputs a color and a depth to a frame buffer. The view frustum may refer to a range corresponding to a camera configured to observe the virtual scene. The unblocked model in the view frustum is a 3D model of all scene objects visible in the virtual scene within the range corresponding to the camera, and the color and the depth are a color and a depth of the 3D model. The scene object may refer to an object in the virtual scene, such as a static object in a static state and a moving object in a moving state. The static object may include at least one of the following: a virtual house, a virtual mountain, a virtual ground, a virtual wall, and a virtual island. The moving object may include at least one of the following: a virtual character, a virtual animal, and a virtual river.

In some embodiments, the first image frame is an image frame generated by drawing and rendering the virtual scene most recently. For example, the first virtual image is an image frame displayed by the computer device at a current moment. Alternatively, the first virtual image is an image frame that is drawn by the computer device before the current moment. This is not limited in this embodiment of this application.

In this embodiment of this application, in a process of displaying the image frame for the virtual scene, when the computer device needs to generate the image frame through prediction, the computer device may acquire the most recent image frame (i.e., the first image frame) generated through rendering, to generate a next to-be-displayed image frame (such as a second image frame described below) based on the image frame through prediction. The generating a next to-be-displayed image frame through prediction refers to that a part or all of the image frame is generated through prediction based on a previous first image frame. The "prediction" process herein may refer to subsequent operations, and details are not described herein again.

For the first image frame of the virtual scene, the first image frame may be displayed on the screen based on a scene depth (SceneDepth) texture map and a scene color (SceneColor) texture map of the first image frame. The first scene depth texture map is the scene depth texture map of the first image frame, and the first scene color texture map is the scene color texture map of the first image frame. The scene depth texture map contains depths corresponding to pixels in the image frame of the virtual scene. A relationship between the depth in the scene depth texture map and the pixel is associated through UV coordinates of the pixel. For example, the scene depth texture map contains depths corresponding to the UV coordinates of the pixels. That is, the depth of each pixel is a depth corresponding to the UV coordinates of the pixel.

The scene color texture map contains colors corresponding to the pixels in the image frame of the virtual scene. A relationship between a color value in the scene color texture map and the pixel is associated through UV coordinates of the pixel. For example, the scene color texture map contains color values corresponding to the UV coordinates of the pixels. That is, the color value of each pixel is a color value corresponding to the UV coordinates of the pixel.

**Operation 220:** Acquire, based on the first scene depth texture map, a first spatial position of a vertex of a target triangular surface (namely, a target triangular surface) in a first clipping space, the target triangular surface being a triangular surface of a first scene object in the first image frame, and the first clipping space corresponding to a first camera parameter of the first image frame.

In the virtual scene, a model of each scene object may be formed by several triangular surfaces (meshes). Points at three corners of each triangular surface may be referred to as vertexes of the triangular surface.

**In** some embodiments, the first scene object may include a static object that is displayed in the first image frame and static in the virtual scene, for example, a virtual desk, a virtual chair, a virtual road surface, or a virtual wall included in the first image frame. The first scene object may alternatively include all scene objects displayed in the first image frame. For example, in addition to all static objects, the first scene object further includes all moving objects in the first image frame, such as a virtual character and a virtual animal. The first scene object is not limited in this embodiment of this application. For example, for any static object, a model corresponding to the static object may be surrounded by several target triangular surfaces corresponding to the static object, and for any moving object, a model corresponding to the moving object may be surrounded by several target triangular surfaces corresponding to the moving object. In a case that the first scene object includes only the static object, since a change of the static object is not significant, predicting only the static object may not only ensure the prediction accuracy of the second image frame but also reduce the drawing workload of the second image frame, thereby helping reduce the occupied processing resource. In a case that the first scene object includes all scene objects, the drawing workload of the second image frame may be further reduced, thereby further reducing the occupied processing resource.

The camera parameter refers to a parameter configured for describing camera motions, such as rotation, translation, getting close to, getting away from, zooming in, or zooming out. The camera may be a virtual camera configured to observe the virtual scene and may be constructed by imitating the function of a real camera. The foregoing first camera parameter may refer to a camera parameter for rendering and displaying the first image frame. A clipping space corresponding to the first camera parameter refers to a clipping space to which an observation space corresponding to the first camera parameter is transformed. For example, the scene objects in the first image frame are located in the observation space corresponding to the first camera parameter, and models of the scene objects are transformed to the clipping space, i.e., the first clipping space.

The first spatial position is configured for indicating a position of the vertex of the target triangular surface in the first clipping space. For example, the first spatial position may be: spatial coordinates corresponding to coordinates of a vertex of a triangular surface in the first scene depth texture map in the first clipping space.

For convenience of understanding, several spaces involved in the rendering process are introduced below.

1) Object space: it is alternatively referred to as a model space/local space/modeling space and defines a coordinate system of a triangular surface of a model. Each model has its own coordinate system. For example, a geometric center of the model is used as an origin of the coordinate system, and position attributes of the vertexes of the triangular surface in the model are coordinate values relative to the origin. The coordinate space may be referred to as the object space.

2) World space: when a model is placed in a virtual scene (such as a game world), a model matrix needs to be applied to the model. The matrix performs movement, rotation, and scaling transformation on the model, and a transformed model is placed in the world space at a particular angle, size, and position. There is no association relationship between object spaces of different objects, and the world space may provide a reference for positions of different objects in a scene.

3) Observation space: it is alternatively referred to as a viewing angle space, and a coordinate system of this space is based on the camera. For example, a coordinate system is established using a position of the camera as an origin, an orientation of the camera as a positive direction of the Z-axis, a right side of the camera as a positive direction of the X-axis, and an upper side of the camera as a positive direction of the Y-axis. A coordinate space corresponding to the coordinate system is the observation space. The render pipeline is a processing unit that converts 3D scene data into a 2D image. However, in the world space, besides a model, there is a camera that observes the model. In this case, the image observed by the camera may be correctly obtained by defining the foregoing observation space, and calculation may be convenient.

4) Clipping space: it is a space in which a clipping operation is performed after the model of the world space is projected on a corresponding projection surface. A model of a scene object in an entire virtual scene is located in the observation space, and the camera has a visual range. The range may be referred to as view frustum. Objects inside the view frustum are visible to the camera (may be displayed on a screen), and objects outside the view frustum are invisible. To distinguish which objects are visible and which objects are invisible, for a vertex of the model in the observation space, a perspective projection matrix is adopted to transform the vertex of the model to a new space, and the new space is the clipping space. The foregoing process of calculating the perspective projection matrix may be performed by a vertex shader (VS). An output of the VS is a coordinate value of a vertex in the clipping space. If a vertex is located in the view frustum, a range of xyz components of the vertex is [-w, w]. If an absolute value of any one of the xyz components exceeds w, the vertex is clipped (does not appear on the screen). A value of w is designated as 1 before transformation, and a transformed value corresponds to a depth before transformation.

5) Normalized device space: after completing matrix transformation, the VS may perform perspective division. That is, three components, i.e., x, y, and z, of the vertex are divided by a w component to convert to the normalized device space. All coordinates are normalized and fall within a range of [-1, 1].

6) Screen space: for the coordinates in the normalized device space, a viewport transformation matrix is applied so that these coordinates may be translated and scaled into the screen space. The screen space is a 2D space corresponding to the screen. The screen space may be represented through a coordinate system using (0, 0) as an origin, an upward direction as a positive direction of the y-axis, and a right direction as a positive direction of the x-axis. A coordinate range of the coordinate system is determined by the resolution of the screen.

In this embodiment of this application, coordinates of pixels in the scene depth texture map and the scene color texture map may be obtained by performing matrix transformation on coordinates in the clipping space. Correspondingly, for coordinates of a vertex of a triangular surface in the first scene depth texture map, spatial coordinates (i.e., the foregoing first spatial position) of the vertex in the first clipping space corresponding to the first camera parameter may be inversely derived.

**Operation 230:** Map, based on the first camera parameter and a second camera parameter, the first spatial position to a second spatial position in a second clipping space, the second clipping space corresponding to the second camera parameter.

The foregoing second camera parameter may refer to a camera parameter for rendering and displaying the second image frame. In some embodiments, the second camera parameter is a camera parameter at the current moment, and the first camera parameter is a latest camera parameter before the current moment. For another example, the first camera parameter is a camera parameter at the current moment, and the second camera parameter is a latest camera parameter after the current moment. This is not limited in this embodiment of this application.

The second image frame may refer to a prediction frame that needs to be displayed after the first image frame. For example, a third image frame needs to be displayed after the first image frame. The second image frame may be used as an intermediate frame to be displayed between the first image frame and the third image frame. The third image frame is also an image frame generated by drawing and rendering the virtual scene. In this embodiment of this application, the prediction frame is an image frame obtained through prediction, rather than an image frame generated by drawing and rendering the virtual scene, or an image frame obtained through interpolation based on the image frame generated by drawing and rendering the virtual scene.

The second clipping space may be a clipping space to which an observation space corresponding to the second camera parameter is transformed. For example, the scene objects in the second image frame are located in the observation space corresponding to the second camera parameter, and models of the scene objects are transformed to the clipping space, i.e., the second clipping space.

The second spatial position is configured for indicating a position of the vertex of the target triangular surface in the second clipping space. For example, the second spatial position may be: spatial coordinates corresponding to coordinates of a vertex of a triangular surface in the scene depth texture map of the second image frame in the second clipping space. In some embodiments, each image frame may correspond to one clipping space to perform different clipping operations.

For two different moments, parameters of the camera observing the virtual scene usually change (move, rotate, and the like). If a position of the first scene object in the virtual scene does not change, in a case that spatial coordinates of a vertex of a triangular surface of the first scene object in a clipping space (for example, the first clipping space) at a previous moment are known, spatial coordinates (for example, a second spatial position) of the vertex of the triangular surface in a clipping space (for example, the second clipping space) at the current moment may be derived (or mapped) with reference to a camera parameter (for example, a first camera parameter) at the previous moment and a camera parameter (for example, the second camera parameter) at the current moment.

**Operation 240:** Generate a second scene depth texture map and a second scene color texture map based on the second spatial position and the first scene color texture map.

The second scene depth texture map is a scene depth texture map of the second image frame, and the second scene color texture map is a scene color texture map of the second image frame.

In a case that the spatial coordinates (i.e., the second spatial position) of the vertex of the triangular surface on the first scene object in the virtual scene in the clipping space at the current moment are derived, depths of the pixels on the triangular surface at the current moment may be determined through the spatial coordinates of the vertex of the triangular surface on the first scene object in the clipping space at the current moment, and color values of the pixels at the previous moment are assigned to the current moment so that the second scene depth texture map and the second scene color texture map at the current moment may be obtained.

In some embodiments, coordinates of pixels in the scene depth texture map and the scene color texture map may be obtained by performing matrix transformation on coordinates in the clipping space. That is, the second scene depth texture map and the second scene color texture map may be obtained based on the second spatial position through matrix transformation. This is not limited in this embodiment of this application.

**Operation 250:** Display a second image frame based on the second scene depth texture map and the second scene color texture map. In embodiments of the present application, operation 250 can also be considered as following operations: a second image frame being displayed based on the second scene depth texture map and the second scene color texture map.

After the second scene depth texture map and the second scene color texture map at the current moment are obtained, the second image frame that needs to be displayed at the current moment may be displayed on the screen. The second scene depth texture map and the second scene color texture map may be understood as a drawing result of the second image frame. The second image frame is rendered based on the drawing result to obtain a rendering result so that the first image frame may be displayed on the screen based on the rendering result.

In a case that the second image frame is an image frame obtained through prediction based on a latest rendering frame (i.e., the first image frame), the second image frame may alternatively be referred to as a prediction frame. That is, part or all information in the second image frame is obtained by predicting the previous rendering frame, rather than being directly obtained by mapping a model of the scene object in the virtual scene. The prediction frame may be used as an intermediate frame between two adjacent image frames to improve an image display frame rate for the virtual scene.

In summary, according to the solutions shown in the embodiments of this application, the first scene depth texture map and the first scene color texture map (i.e., a rendering result) of the first image frame are acquired, a first spatial position of a vertex of a triangular surface of a target scene object in the first image frame in the first clipping space may be acquired based on the first scene depth texture map, the first spatial position is mapped to the second spatial position based on the first spatial position, the first camera parameter corresponding to the first image frame, and the second camera parameter, and then the second scene depth texture map and the second scene color texture map of the second image frame are generated based on the second spatial position and the first scene color texture map to display the second image frame. In the foregoing solution, after the first image frame of the virtual scene is drawn, for the first scene object in the first image frame, a pixel position, depth, and color that correspond to the first scene object in the second image frame may be obtained through space mapping and camera parameter-based prediction. The second image frame does not need to be redrawn and rendered for the first scene object, thereby greatly reducing the workload of drawing and rendering the second image frame, and further reducing processing resources occupied by the image display of the virtual scene. In addition, before a new image frame after the first image frame is rendered, the acquired second image frame may be directly rendered. There is no need to wait for a rendering result of the new image frame to acquire and render the second image frame, thereby effectively improving an image display frame rate for the virtual scene, and further improving the display effect of the virtual scene.

The embodiment shown in FIG. 2 of this application provides a solution in which the prediction frame is obtained through prediction of the rendering frame to insert the prediction frame (i.e., the second image frame) between the rendering frames. That is, after each rendering frame is drawn, a corresponding prediction frame may be immediately displayed on the screen without increasing additional on-screen waiting time so that a next rendering frame may be displayed on the screen, thereby improving the frame rate. Since all or part of information in the prediction frame may be directly obtained through prediction of the previous frame, the complexity of generating the prediction frame can be greatly reduced, thereby improving the frame rate while reducing the occupation of processing resources.

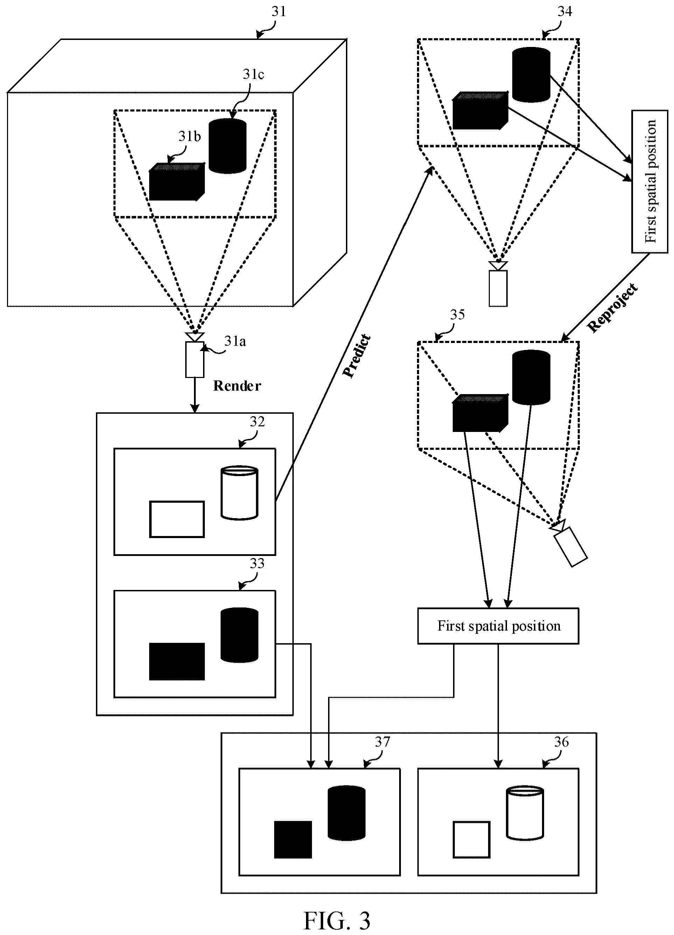

For example, FIG. 3 is a framework diagram of an image prediction process according to an embodiment of this application. As shown in FIG. 3, in a process of displaying a scene image (i.e., an image frame) of a virtual scene 31, at a first moment, a scene element 31b and a scene element 31c that are in a field of view of a camera 31a in the virtual scene are mapped to a 2D image through a render pipeline to obtain a first scene depth texture map 32 and a first scene color texture map 33, and then an first image frame at the first moment is displayed according to the first scene depth texture map 32 and the first scene color texture map 33.

At a second moment after the first moment, a camera parameter of the camera 31a changes. In this case, a scene element that is in the field of view of the camera 31a in the virtual scene is not directly mapped to a new 2D image through a changed camera parameter. Instead, based on the first scene depth texture map 32, a vertex of a triangular surface of the first scene element (such as the scene element 31b or the scene element 31c), and a first spatial position in a clipping space 34 corresponding to the camera parameter at the first moment are predicted. Then, the first spatial position is re-projected into a clipping space 35 corresponding to the camera parameter at the second moment through reprojection with reference to the camera parameter at the first moment and the camera parameter at the second moment to obtain a second spatial position. Further, a second scene depth texture map 36 at the second moment is obtained. Then, with reference to the second spatial position and the first scene color texture map 33, a second scene color texture map 37 at the second moment may be obtained, and then the second image frame at the second moment is displayed according to the second scene depth texture map 36 and the second scene color texture map 37. In some embodiments, for a third moment after the second moment, a third image frame generated by drawing and rendering the virtual scene 31 at the third moment may be displayed.

In the second image frame, at least the information corresponding to the first scene element is obtained through prediction according to information in the first image frame that has been rendered previously. Compared with a manner of rendering directly from the virtual scene, the foregoing solution may reduce the resource occupation in the process of generating the second image frame.

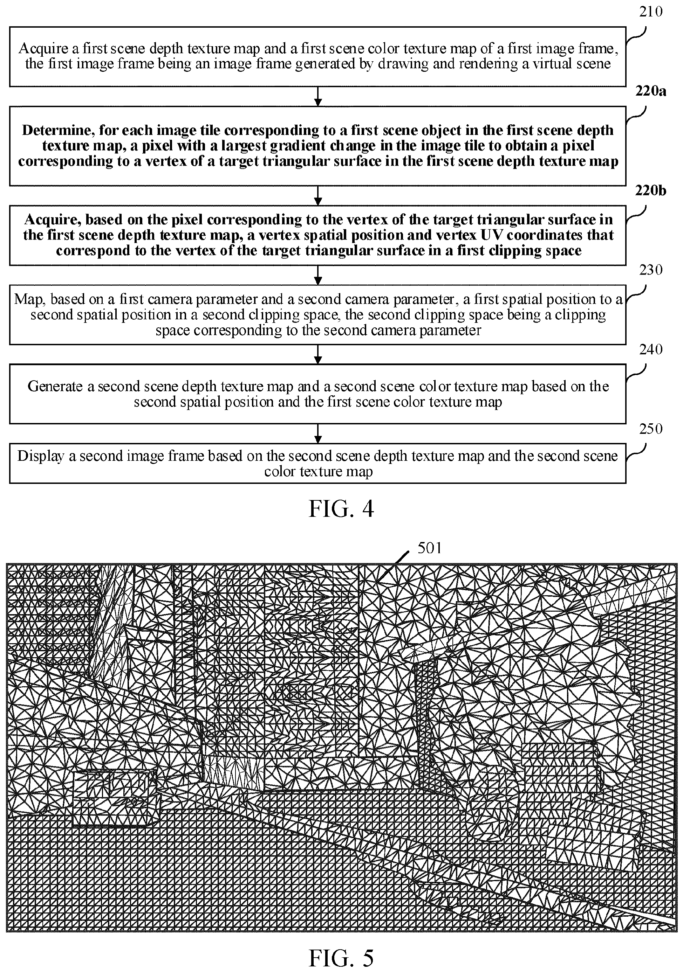

Based on the embodiment shown in FIG. 2, FIG. 4 is a flowchart of an image display method for a virtual scene according to another embodiment of this application. As shown in FIG. 4, operation 220 may be implemented as operation 220a and operation 220b.

**Operation 220a:** Determine, for each image tile corresponding to the first scene object in the first scene depth texture map, a pixel with a largest gradient change in the image tile to obtain a pixel corresponding to the vertex of the target triangular surface in the first scene depth texture map.

Since the model of the scene object in the virtual scene is bounded by triangular surfaces, a depth change of two adjacent points on the same triangular surface is relatively smooth, and a depth change of two adjacent points belonging to different triangular surfaces is relatively abrupt. This case may be reflected by gradient change values of adjacent pixels in the scene depth texture map. The gradient change value is configured for indicating the magnitude of the gradient change.

Based on the foregoing principle, in this embodiment of this application, for an existing first scene depth texture map, the first scene depth texture map may be divided into a plurality of image tiles. If there is a vertex of a triangular surface on the first scene object in each image tile in a region corresponding to the first scene object in the first scene depth texture map, a pixel with a largest gradient change in the image tile may be considered as corresponding to the vertex of the target triangular surface on the first scene object.

The image tile refers to a tile obtained by dividing an image. Each image tile may be formed by a plurality of pixels. For example, the first scene depth texture map may be evenly divided into a plurality of image tiles, and then an image tile corresponding to the first scene object is obtained.

**Operation 220b:** Acquire, based on the pixel corresponding to the vertex of the target triangular surface in the first scene depth texture map, a vertex spatial position and vertex UV coordinates that correspond to the vertex of the target triangular surface in the first clipping space.

The first spatial position includes the vertex spatial position and the vertex UV coordinates that correspond to the vertex of the target triangular surface in the first clipping space, the vertex spatial position refers to a spatial position of the vertex, and the vertex UV coordinates refer to UV coordinates of the vertex.

After a corresponding pixel in each image tile in the region of the first scene object corresponding to the vertex of the triangular surface on the first scene object in the first scene depth texture map is determined, since the first scene depth texture map contains the depth and the UV coordinates of the pixel, the vertex spatial position and the vertex UV coordinates of the vertex of the triangular surface on the first scene object in the first clipping space may be determined.

In some embodiments, the acquiring, based on the pixel corresponding to the vertex of the target triangular surface in the first scene depth texture map, a vertex spatial position and vertex UV coordinates that correspond to the vertex of the target triangular surface in the first clipping space includes:

acquiring a spatial position and UV coordinates of the pixel corresponding to the vertex of the target triangular surface in the first scene depth texture map in the first clipping space as the vertex spatial position and the vertex UV coordinates that correspond to the vertex of the target triangular surface in the first clipping space.

For example, based on a depth of the pixel corresponding to the vertex of the target triangular surface in the first scene depth texture map, the spatial position of the pixel corresponding to the vertex of the target triangular surface in the first scene depth texture map in the first clipping space is determined and used as the vertex spatial position corresponding to the vertex of the target triangular surface in the first clipping space. Based on the UV coordinates of the pixels included in the first scene depth texture map, the UV coordinates of the pixel corresponding to the vertex of the target triangular surface in the first scene depth texture map are determined and used as the vertex UV coordinates corresponding to the vertex of the target triangular surface in the first clipping space.

In a possible implementation of this application, a computer device may directly use a pixel corresponding to the vertex of the triangular surface on the first scene object in each image tile in the region of the first scene object in the first scene depth texture map as the vertex of the triangular surface on the first scene object and use a spatial position and UV coordinates of the pixel as a vertex spatial position and vertex UV coordinates that correspond to the vertex. An execution process of this solution is simple, the resource consumption is small, and the image prediction efficiency can be improved.

In some embodiments, the second spatial position includes the vertex spatial position and the vertex UV coordinates that correspond to the vertex of the target triangular surface in the second clipping space, and mapping, based on the first camera parameter and the second camera parameter, the first spatial position to the second spatial position in the second clipping space includes the following operations.

    1. A foreground pixel and a background pixel that correspond to the vertex of the target triangular surface in the first scene depth texture map are acquired.

The foreground pixel refers to a pixel with a smallest depth among pixels within a target range, the background pixel refers to a pixel with a largest depth among the pixels within the target range, and the target range is determined based on a position corresponding to the vertex of the target triangular surface in the first scene depth texture map.

In some embodiments, the target range refers to a surrounding area of the position corresponding to the vertex of the target triangular surface in the first scene depth texture map. A depth of the pixel may be determined based on the first scene depth texture map.

2. Based on the first camera parameter and the second camera parameter, a spatial position of the foreground pixel in the first clipping space and a spatial position of the background pixel in the first clipping space are mapped to the second clipping space to obtain a spatial position of the foreground pixel in the second clipping space and a spatial position of the background pixel in the second clipping space.

In some embodiments, in a case that a distance between the spatial position of the foreground pixel in the second clipping space and the spatial position of the background pixel in the second clipping space is greater than a distance threshold, the spatial position of the foreground pixel in the second clipping space and UV coordinates of the background pixel are used as a vertex spatial position and vertex UV coordinates that correspond to the vertex of the target triangular surface in the second clipping space.

The distance threshold may be set and adjusted according to an actual use requirement. This is not limited in this embodiment of this application. For example, in a case that the distance between the spatial position of the foreground pixel in the second clipping space and the spatial position of the background pixel in the second clipping space is greater than the distance threshold, the spatial position of the foreground pixel in the second clipping space is used as the vertex spatial position corresponding to the vertex of the target triangular surface in the second clipping space, and the UV coordinates of the background pixel are used as the vertex UV coordinates corresponding to the vertex of the target triangular surface in the second clipping space.

In some embodiments, in a case that the distance between the spatial position of the foreground pixel in the second clipping space and the spatial position of the background pixel in the second clipping space is not greater than the distance threshold, the spatial position and UV coordinates of the foreground pixel in the second clipping space are used as the vertex spatial position and the vertex UV coordinates that correspond to the vertex of the target triangular surface in the second clipping space.

For example, in a case that the distance between the spatial position of the foreground pixel in the second clipping space and the spatial position of the background pixel in the second clipping space is not greater than the distance threshold, the spatial position of the foreground pixel in the second clipping space is used as the vertex spatial position corresponding to the vertex of the target triangular surface in the second clipping space, and the UV coordinates of the foreground pixel are used as the vertex UV coordinates corresponding to the vertex of the target triangular surface in the second clipping space.

If a position of the vertex is located just at an edge of an object and a background, since a motion speed of the foreground object pixel is much greater than that of the background pixel when a perspective camera moves transversely, stretching and aliasing may be caused if the vertex spatial position and the vertex UV coordinates of the vertex in the first clipping space are directly used. In view of this, in this embodiment of this application, in the process of acquiring, based on the pixel corresponding to the vertex of the target triangular surface in the first scene depth texture map, the vertex spatial position and the vertex UV coordinates that correspond to the vertex of the target triangular surface in the second clipping space, two pixels with the smallest depth and the largest depth may be selected from the pixel corresponding to the vertex in the first scene depth texture map and a plurality of pixels around the pixel and used as the foreground pixel and the background pixel. Then, the two pixels are projected to the second clipping space through reprojection.

For example, spatial positions (spatial coordinates, such as homogeneous coordinates) of the two pixels (i.e., the foreground pixel and the background pixel) in the first clipping space are multiplied by a reprojection transformation matrix to obtain spatial positions of the two pixels in the second clipping space. The foregoing reprojection transformation matrix is determined by the first camera parameter and the second camera parameter. Then, spatial positions of the two pixels after reprojection are compared. If a difference between the spatial positions after reprojection is relatively large, the two pixels belong to different objects. The spatial position of the foreground pixel in the second clipping space and the UV coordinates corresponding to the background pixel in the second clipping space may be used as the vertex spatial position and the vertex UV coordinates of a corresponding vertex. Otherwise, the spatial position of the foreground pixel in the second clipping space and the UV coordinates corresponding to the foreground pixel in the second clipping space may be used as the vertex spatial position and the vertex UV coordinates of the corresponding vertex. In this way, stretching and aliasing of an edge position of the first scene object can be suppressed, thereby improving the accuracy of image frame prediction.

According to the foregoing solution, the vertex in the image tile is positioned using the pixel with the largest gradient change in the image tile of the scene depth texture map to determine the vertex spatial position and the vertex UV coordinates of the vertex of the triangular surface on the first scene object in the first clipping space and to further determine spatial positions of points on the entire triangular surface in the first clipping space, thereby inversely deriving the spatial position of the triangular surface of the first scene object in the clipping space through the scene depth texture map.

In some embodiments, before the determining a pixel with a largest gradient change in the image tile to obtain a pixel corresponding to the vertex of the target triangular surface in the first scene depth texture map, the method further includes:

acquiring a sum of squares of gradient differences of each pixel in the image tile on two coordinate components as a gradient change value at each pixel in the image tile. The two coordinate components are two components in a UV coordinate system of the first scene depth texture map.

In some embodiments, for each pixel, a gradient difference of the pixel on the U-axis and a gradient difference of the pixel on the V-axis are acquired, and then a square of the gradient difference of the pixel on the U-axis and a square of the gradient difference of the pixel on the V-axis are added to obtain a gradient change value at the pixel. The gradient difference is configured for indicating a gradient change at the pixel.

In the solution shown in this embodiment of this application, the sum of squares of the gradient differences of the pixel on two coordinate components is used as the gradient change value at the pixel, which provides a manner of accurately representing a change status of a pixel depth, thereby facilitating improving the accuracy of vertex prediction.

In some embodiments, the acquiring a sum of squares of gradient differences of each pixel in the image tile on two coordinate components as a gradient change value at each pixel in the image tile includes:

calculating, for each pixel in the image tile, based on a difference between a depth of a right pixel of the pixel and a depth of the pixel and a difference between a depth of a lower pixel of the pixel and the depth of the pixel, a sum of squares of gradient differences of the pixel on the two coordinate components as a gradient change value at the pixel.

In some embodiments, the difference between the depth of the right pixel of the pixel and the depth of the pixel is determined as the gradient difference of the pixel on the U-axis, the difference between the depth of the lower pixel of the pixel and the depth of the pixel is determined as the gradient difference of the pixel on the V-axis, and then the square of the gradient difference of the pixel on the U-axis and the square of the gradient difference of the pixel on the V-axis are added to obtain the gradient change value at the pixel.

In this embodiment of this application, the computer device may obtain a square of the difference between the depth of the right pixel of the pixel and the depth of the pixel and a square of the difference between the depth of the lower pixel of the pixel and the depth of the pixel and use a sum of the two squares as the sum of squares of the gradient differences of the pixel on two coordinate components, which simplifies the calculation of the gradient change value, thereby reducing the calculation resource consumption and ensuring the efficiency of vertex prediction while ensuring the accuracy of vertex prediction.

In the solution provided in this embodiment of this application, a scene color (SceneColor, corresponding to the foregoing scene color texture map) and a scene depth (SceneDepth, corresponding to the foregoing scene depth texture map) of a $(k-1)^{th}$ frame cached in the frame buffer and a camera motion parameter (corresponding to the foregoing camera parameter) of the $k^{th}$ frame may be adopted to predict and generate a drawing result of a scene color (SceneColor) and a scene depth (SceneDepth) of the $k^{th}$ frame.

In a normal process of drawing a scene object, a triangular surface of an unblocked model in a view frustum is sequentially rasterized and shaded, and a color and a depth are outputted to the frame buffer. However, in the frame prediction implemented in this application, all triangular surfaces of the static object appearing on the screen are reversely restored using the scene color (SceneColor) and the scene depth (SceneDepth) after drawing. To conveniently connect vertexes into a mesh and distribute the vertexes more uniformly, in this application, a vertex is allocated to each pixel tile formed by n × n pixels in a scene depth texture map (SceneDepth Texture) and is located at a pixel that most likely has a vertex in the pixel tile.

In this application, a first-order non-linear operator $(\frac{\partial\ Depth}{\partial u})^2 + (\frac{\partial\ Depth}{\partial v})^2$ is used, where u is a horizontal coordinate of the scene depth texture map (SceneDepth Texture), v is a vertical coordinate of the scene depth texture map (SceneDepth Texture), and a magnitude of a depth field gradient change at each pixel in the scene depth texture map is measured using a sum of squares of gradients of the depth map on the components. An operation result of the operator is a scalar, thereby facilitating magnitude comparison. In addition, the squares may enable the comparison to be not affected by positive and negative gradients so that only the change rate of the gradient is considered.

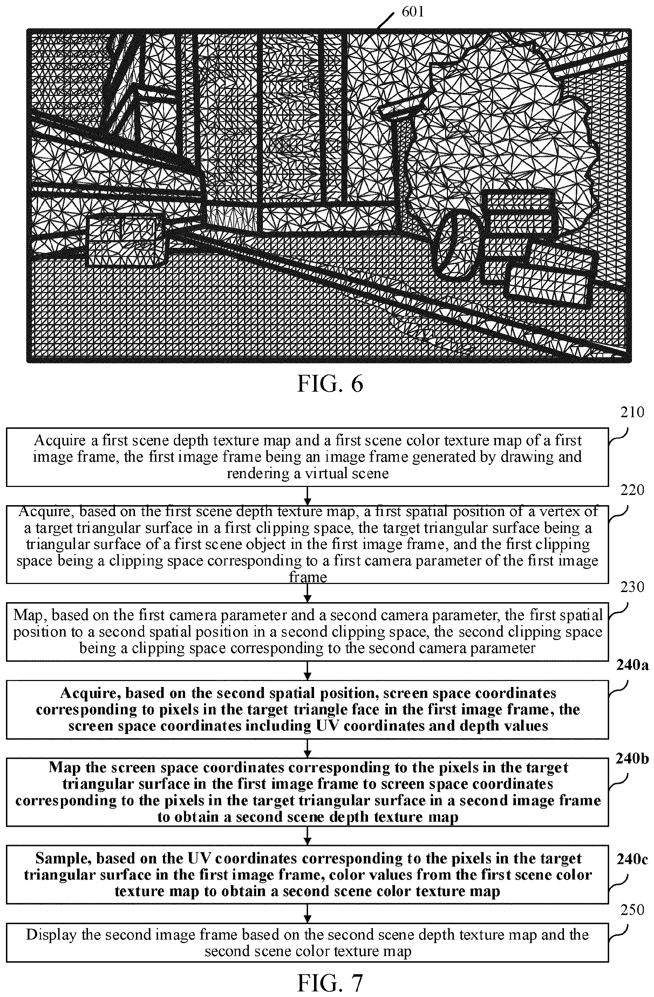

After finding, using the operator, a pixel with the largest the largest change in the sum of squares of gradients in the pixel tile formed by n × n pixels, a vertex is located at a position of the pixel. Then, vertexes are connected to each other to form triangular surfaces so that all triangular surfaces appearing on the screen may be restored. In this application, a set of all restored triangular surfaces on the screen is referred to as a "screen space aggregated mesh". FIG. 5 and FIG. 6 are a schematic diagram of a screen space aggregated mesh in a scene depth and a schematic diagram of a screen space aggregated mesh in a scene color according to this application. A screen space aggregated mesh 501 is located in the scene depth and formed by all triangular surfaces appearing on the screen. A screen space aggregated mesh 601 is located in the scene color and formed by all triangular surfaces appearing on the screen.

After the screen space aggregated mesh is restored, according to a VP matrix of the $k^{th}$ frame (i.e., a product of a V matrix of the $k^{th}$ frame and a P matrix of the $k^{th}$ frame, which is usually determined by a camera parameter of a game engine and is denoted as $P_k V_k$) and a VP matrix of the (k-1)$^{th}$ frame (denoted as $P_{k-1}V_{k-1}$, with an inverse matrix being $V_{k-1}^{-1}P_{k-1}^{-1}$), homogeneous coordinates $[x\ y\ z\ w]_{k-1}^{\mathrm{T}}$ of a vertex spatial position of a vertex of a triangular surface of the (k-1)$^{th}$ frame in the clipping space may be reprojected to homogeneous coordinates $[x\ y\ z\ w]_k^{\mathrm{T}}$ of a vertex spatial position of a vertex of a triangular surface of the k$^{th}$ frame in the clipping space using the following reprojection formula. Since reprojected vertexes of triangular surfaces all come from the static object, a quotient between an M matrix of the object of the (k-1)$^{th}$ frame and an M matrix of the object of the k$^{th}$ frame is a unit matrix (i.e., $M_{k-1}\, M_k^{-1} = I$). In addition, the VP matrix is related to the camera. That is, a reprojection result of the vertex of the static object is accurate according to this method.

In this embodiment of this application, the first scene object in the virtual scene may be a static object. A clipping spatial position (i.e., the spatial position in the clipping space) and screen space UV coordinates (i.e., UV coordinates in the screen space) corresponding to the clipping spatial position may be mutually converted using perspective division and viewport transformation, as shown in the following formula:

$$
\begin{bmatrix} x \\ y \\ z \\ w \end{bmatrix}_k = P_k V_k \underbrace{M_{k-1}\, M_k^{-1}}_{I} V_{k-1}^{-1} P_{k-1}^{-1} \begin{bmatrix} x \\ y \\ z \\ w \end{bmatrix}_{k-1} ,
$$

where a matrix product of $P_k V_k V_{k-1}^{-1} P_{k-1}^{-1}$ is the reprojection transformation matrix, and homogeneous coordinates $[x\ y\ z\ w]_{k-1}^{\mathrm{T}}$ of the clipping spatial position of the (k-1)$^{th}$ frame is multiplied by the reprojection transformation matrix to obtain homogeneous coordinates $[x\ y\ z\ w]_k^{\mathrm{T}}$ of the clipping spatial position of the k$^{th}$ frame. This process of transforming the coordinates of the (k-1)$^{th}$ frame to the coordinates of the k$^{th}$ frame through matrix multiplication is referred to as "reprojection". Correspondingly, a process of transforming the coordinates of the k$^{th}$ frame to the coordinates of the (k-1)$^{th}$ frame by multiplying the inverse matrix of the reprojection transformation matrix is referred to as "inverse reprojection".

Based on the embodiment shown in FIG. 2 or FIG. 4, FIG. 7 is a flowchart of an image display method for a virtual scene according to another embodiment of this application. As shown in FIG. 7, operation 240 may be implemented as operation 240a, operation 240b, and operation 240c.

**Operation 240a:** Acquire, based on the second spatial position, screen space coordinates corresponding to pixels in the target triangular surface in the first image frame, the screen space coordinates including UV coordinates and depth values.

In this embodiment of this application, the computer device may draw all triangular surfaces previously formed by vertexes in the second clipping space to the frame buffer. That is, vertex spatial positions and vertex UV coordinates corresponding to vertexes of the target triangular surface included in the second spatial position in the second clipping space are drawn to the frame buffer. The triangular surface is rasterized as pixels in the second image frame, and UV coordinates of the first image frame recorded on the vertex are interpolated to each pixel. The depth values are sampled from the first depth color texture map using the UV coordinates of the first image frame that are interpolated to the pixels, and the UV coordinates and the depth values are combined into the screen space coordinates of the first image frame so that the screen space coordinates corresponding to the pixels in the target triangular surface in the first image frame may be obtained.

**Operation 240b:** Map the screen space coordinates corresponding to the pixels in the target triangular surface in the first image frame to screen space coordinates corresponding to the pixels in the target triangular surface in the second image frame to obtain the second scene depth texture map.

In some embodiments, after the screen space coordinates of the first image frame are scaled, first clipping space coordinates may be obtained and then mapped to the second image frame to obtain second clipping space coordinates. After the second clipping space coordinates are scaled, the screen space coordinates of the second image frame may be obtained. The z component of the screen space coordinates is a depth value of the pixel in the second image frame. After depth values corresponding to the pixels in the target triangular surface in the second image frame are cached to the texture, the second depth texture map may be obtained.

**Operation 240c:** Sample, based on the UV coordinates corresponding to the pixels in the target triangular surface in the first image frame, color values from the first scene color texture map to obtain the second scene color texture map.

In this embodiment of this application, after obtaining the UV coordinates corresponding to the pixels in the target triangular surface in the first image frame, the computer device may sample color values of the pixels of the target triangular surface from the first scene color texture map to obtain color values corresponding to the pixels of the target triangular surface in the second scene color texture map.

In some embodiments, the sampling, based on the UV coordinates corresponding to the pixels in the target triangular surface in the first image frame, color values from the first scene color texture map to obtain the second scene color texture map includes:

reversely remapping spatial positions of the pixels in the target triangular surface in the second clipping space back to the first clipping space to obtain reversely remapped positions of the pixels in the target triangular surface in the first clipping space; acquiring reversely remapped UV coordinates and reversely remapped depths of the pixels in the target triangular surface based on the reversely remapped positions of the pixels in the target triangular surface in the first clipping space; and sampling, based on the reversely remapped UV coordinates and reversely remapped depths of the pixels in the target triangular surface, the color values from the first scene color texture map to obtain the second scene color texture map.

The reversely remapped position refers to a position obtained through reverse remapping. In this embodiment of this application, the reversely remapped position may refer to a spatial position obtained by reversely remapping the spatial position in the second clipping space to the first clipping space.

In some embodiments, the spatial position of the pixel in the second clipping space includes UV coordinates and a depth. After the reversely remapped position of the pixel in the first clipping space is scaled, reversely remapped UV coordinates and a reversely remapped depth of the pixel may be obtained. That is, the UV coordinates and the depth included in the reversely remapped position are scaled to obtain the reversely remapped UV coordinates and the reversely remapped depth of the pixel.

In some embodiments, in a case that a difference between a reversely remapped depth of a first pixel and a depth of the first pixel sampled from the first depth color texture map is less than a depth difference threshold, the color value is sampled from the first scene color texture map using reversely remapped UV coordinates of the first pixel and used as a color value of the first pixel in the second scene color texture map. The first pixel is any one of the pixels in the target triangular surface. The depth difference threshold may be set and adjusted according to an actual use requirement. This is not limited in this embodiment of this application.

In a case that the difference between the reversely remapped depth of the first pixel and the depth of the first pixel sampled from the first depth color texture map is not less than the depth difference threshold, the color value is sampled from the first scene color texture map using UV coordinates of a vertex corresponding to the first pixel in the first image frame and used as the color value of the first pixel in the second scene color texture map.

For example, UV coordinates and a depth value of a pixel in the second image frame are used to form 3D coordinates, and the second position of the pixel in the second clipping space may be obtained after scaling. Based on the first camera parameter and the second camera parameter, the second position is remapped back to the first clipping space to obtain a first remapped position of the first clipping space. The first remapped position is scaled to obtain first remapped UV coordinates and a first remapped depth (i.e., the reversely remapped UV coordinates and the reversely remapped depth of each pixel in the target triangular surface). Then, the first remapped depth of the pixel is compared with the depth value sampled from the first depth color texture map, and if a difference is less than the depth difference threshold, a color value is sampled from the first scene color texture map using the first remapped UV coordinates. If the difference is greater than the depth difference threshold, a color value is directly sampled from the first scene color texture map using the UV coordinates of the first image frame recorded by the vertex interpolated to the pixel. After the color values obtained by sampling all pixels are cached to the texture, the second color texture map may be obtained. Through the foregoing processing, shearing aliasing in the color sampling process may be suppressed, thereby improving the prediction accuracy of the scene color texture map.

In some embodiments, the computer device may only predict the static objects in the virtual scene to generate corresponding image texture data to ensure the accuracy of the image generated through prediction.

Alternatively, the computer device may predict all objects in the virtual scene to generate corresponding image texture data to ensure the efficiency of generating the image through prediction.

In some embodiments, the mapping, in a case that the first scene object includes the static object, the screen space coordinates corresponding to the pixels in the target triangular surface in the first image frame to the screen space coordinates corresponding to the pixels in the target triangular surface in the second image frame to obtain a second scene depth texture map includes:

mapping the screen space coordinates corresponding to the pixels in the target triangular surface in the first image frame to the screen space coordinates corresponding to the pixels in the target triangular surface in the second image frame to obtain a scene depth texture map of the static object; drawing and rendering a moving object in the virtual scene based on the second camera parameter to obtain a scene depth texture map corresponding to the moving object; and acquiring the second scene depth texture map based on the scene depth texture map of the static object and the scene depth texture map of the moving object.

The sampling, in a case that the first scene object includes the static object, based on the UV coordinates corresponding to the pixels in the target triangular surface in the first image frame, the color values from the first scene color texture map to obtain a second scene color texture map includes:

sampling, based on the UV coordinates corresponding to the pixels in the target triangular surface in the first image frame, the color values from the first scene color texture map to obtain a scene color texture map of the static object; drawing and rendering the moving object in the virtual scene based on the second camera parameter to obtain a scene color texture map of the moving object; and acquiring the second scene color texture map based on the scene color texture map of the static object and the scene color texture map of the moving object.

In this embodiment of this application, in a case that the first scene object includes the static object that is displayed in the first image frame and static in the virtual scene, the scene depth texture map and the scene color texture map of the static object may be obtained through prediction using the foregoing solution (for example, the operations in the solution shown in FIG. 2, FIG. 4, or FIG. 7). For the moving object in the virtual scene, the computer device may generate the scene depth texture map and the scene color texture map of the moving object by mapping the moving object to a 2D image, for example, project the moving object in the virtual scene from a 3D model to a 2D plane according to the current second camera parameter to obtain the scene depth texture map and the scene color texture map of the moving object. Then, the scene depth texture map and the scene color texture map of the static object and the scene depth texture map and the scene color texture map of the moving object are combined to obtain a complete second scene depth texture map and second scene color texture map of the second image frame.

That is, in this embodiment of this application, in the process of rendering the first image frame, the computer device may determine which scene objects in the virtual scene are static objects and which objects are moving objects, and mark or record the UV coordinates of the static objects or the moving objects in the first image frame. Subsequently, when the second image frame is generated through prediction, the computer device may predict, based on some data of the UV coordinates corresponding to the static objects in the first image frame, the UV coordinates, depth, and color information of the static objects in the second image frame. For the moving objects, the computer device may obtain the UV coordinates, depth, and color information of the moving objects in the second image frame through a rendering process, and finally combine the UV coordinates, depths, and color information of the static objects and the moving objects to obtain a final second scene depth texture map and second scene color texture map of the second image frame. In this way, the prediction efficiency of the second image frame may be improved, and the processing resources required to predict the second image frame may be reduced.

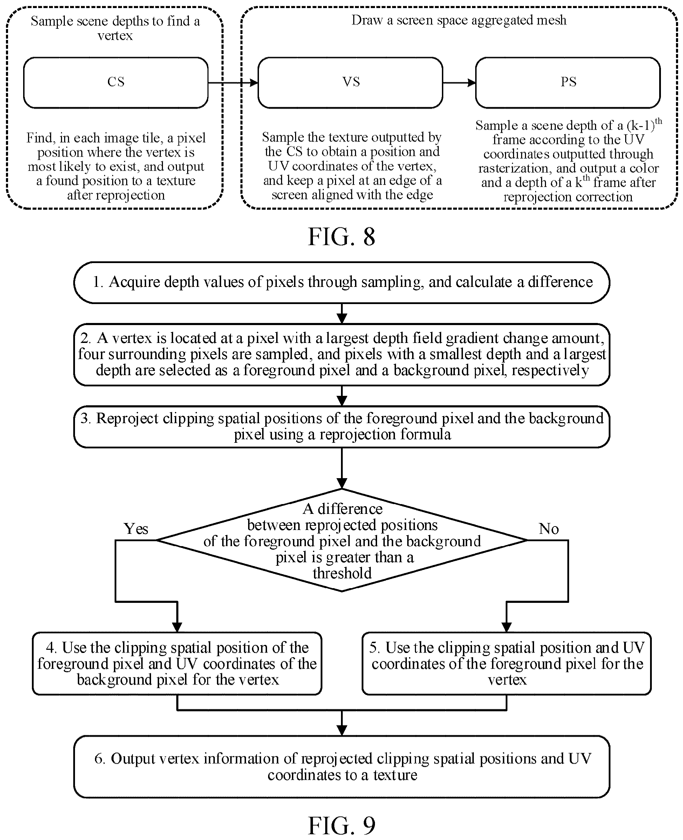

FIG. 8 is an implementation framework diagram of frame prediction according to an embodiment of this application.

As shown in FIG. 8, positions and UV coordinates of vertexes in a screen space aggregated mesh are first calculated through the CS pass according to a scene depth texture map (SceneDepth Texture) of a $(k-1)^{th}$ frame, and one GPU thread is dispatched for each pixel tile that is formed by n $\times$ n pixels and corresponds to the scene depth texture map (SceneDepth Texture) to traverse all pixels in the pixel tile and obtain depth values of the pixels through sampling. In some embodiments, a difference $((Depth(u + 1, v) - Depth(u, v))^2 + (Depth(u, v + 1)-Depth(u, v))^2)$ may be adopted to approximate the differential operator $(\frac{\partial\,Depth}{\partial u})^2 + (\frac{\partial\,Depth}{\partial v})^2$ mentioned above. That is, a depth field gradient change amount at each pixel may be calculated by adding a square of a difference between a depth of a right pixel of the pixel and a depth of the pixel to a square of a difference between a depth of a lower pixel of the pixel and the depth of the pixel. After the pixel tile is traversed and the depth field gradient change amounts (i.e., a calculation result of the difference operator) are obtained for the pixels in the pixel tile, a position of a pixel with a largest depth field gradient change amount may be obtained. The position may be considered as a position of a vertex in the pixel tile.

To avoid deformation caused by stretching, after the position of the vertex is determined, pixels with the smallest depth value and the largest depth value are selected from four adjacent pixels (corresponding to the pixels within the target range), i.e., the position, and the right, lower, and lower right of the position, and used as the foreground pixel and the background pixel. If the selected foreground pixel and background pixel are located on the same object, after the position coordinates of the selected foreground pixel and background pixel are multiplied by the reprojection transformation matrix, the obtained position coordinates are still close to each other. In this case, a clipping spatial position and UV coordinates of the foreground pixel are used for the vertex. On the contrary, if the reprojected position coordinates are excessively far, the foreground pixel and the background pixel belong to different objects (for example, a bus and a building in FIG. 6). In this case, the clipping spatial position of the foreground pixel and the UV coordinates of the background pixel are used for the vertex to ensure that colors of pixels of a foreground object do not appear in a stretching region. After the stretching deformation correction is completed, vertex information including the clipping spatial position and the UV coordinates after the reprojection is outputted to the texture for use in subsequent operations.

The foregoing process of outputting the vertex information is shown in FIG. 9. 1. Traverse an image tile, acquire depth values of the pixels through sampling, and calculate a difference. 2. A vertex is located at a pixel with a largest depth field gradient change amount, four surrounding pixels are sampled, and pixels with a smallest depth and a largest depth are selected as a foreground pixel and a background pixel, respectively. 3. Reproject clipping spatial positions of the foreground pixel and the background pixel using a reprojection formula. 4. Use, in a case that a difference between reprojected positions of the foreground pixel and the background pixel is greater than a threshold, the clipping spatial position of the foreground pixel and UV coordinates of the background pixel for the vertex. 5. Use, in a case that the difference between the reprojected positions of the foreground pixel and the background pixel is not greater than the threshold, the clipping spatial position and UV coordinates of the foreground pixel for the vertex. 6. Output vertex information of reprojected clipping spatial positions and UV coordinates to a texture.

After this process, a mesh pass is executed to draw a screen space aggregated mesh to a screen to generate a scene color texture map (SceneColor Texture) and a scene depth texture map (SceneDepth Texture) of a $k^{th}$ frame.

In the VS, the vertex information previously outputted by the CS is first read to acquire a clipping spatial position and UV coordinates of the vertex. Meanwhile, to prevent an undrawn blank from being generated at the edge of the screen, the position and UV coordinates of the vertex at the edge of the screen may always be aligned with the edge. Then, the hardware may interpolate the clipping spatial position and the UV coordinates of the pixel through rasterization according to the clipping spatial position and the UV coordinates of the vertex, and then output the clipping spatial position and the UV coordinates of the pixel to a pixel shader (PS).

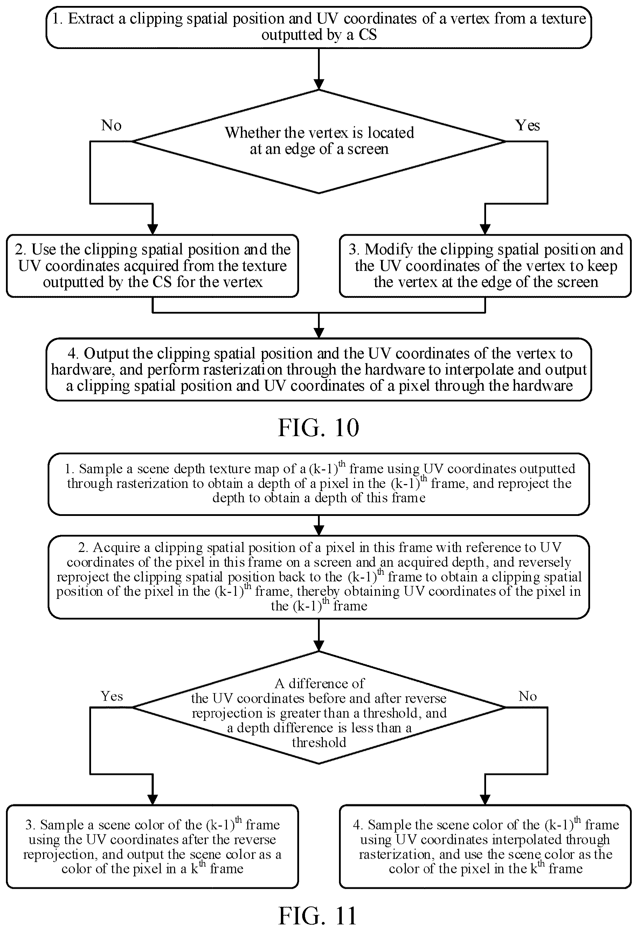

A determining process of outputting the spatial position and the UV coordinates of the pixel is shown in FIG. 10. 1. Extract a clipping spatial position and UV coordinates of a vertex from a texture outputted by a CS. 2. Use, in a case that the vertex is not located at an edge of a screen, the clipping spatial position and the UV coordinates acquired from the texture outputted by the CS for the vertex. 3. Modify, in a case that the vertex is located at the edge of the screen, the clipping spatial position and the UV coordinates of the vertex to keep the vertex at the edge of the screen. 4. Output the clipping spatial position and the UV coordinates of the vertex to hardware, and perform rasterization through the hardware to interpolate and output a clipping spatial position and UV coordinates of the pixel through the hardware.

In the PS, a scene depth texture map (SceneDepth Texture) of a $(k-1)^{th}$ frame is first sampled according to the UV coordinates interpolated through rasterization to obtain a depth value of the $(k-1)^{th}$ frame. Then, the depth value is used as a z component, and after the UV coordinates interpolated through rasterization are mapped from an interval of [0, 1] to [-1, 1], the UV coordinates are used as xy components to construct homogeneous coordinate $\begin{bmatrix} x\ y\ z\ w \end{bmatrix}^{T}_{k-1}$ (the w component is directly taken as 1). After the homogeneous coordinates are multiplied by the reprojection transformation matrix, a z component of the obtained coordinates is a depth value of a pixel of the $k^{th}$ frame.

Similarly to the stretching deformation, if a scene color of the $k^{th}$ frame is obtained after a color value of a pixel in the scene color (SceneColor) of the $(k-1)^{th}$ frame is reprojected directly using the foregoing method of "obtaining a value of the $k^{th}$ frame by reprojecting a value of the $(k-1)^{th}$ frame", shearing aliasing may occur. To prevent shearing deformation, the foregoing acquired depth value of the $k^{th}$ frame may be used as the z component, and after the UV coordinates of the pixel processed by the PS on the screen of the $k^{th}$ frame are mapped from the interval of [0, 1] to [-1, 1], the UV coordinates are used as xy components to construct homogeneous coordinates $\begin{bmatrix} x\ y\ z\ w \end{bmatrix}^{T}_{k}$ (the w component is further directly taken as 1). After the homogeneous coordinates are multiplied by the inverse matrix of the reprojection transformation matrix to perform inverse reprojection, a z component of transformed homogeneous coordinates is compared with the previously obtained depth value of the $(k-1)^{th}$ frame. If they are approximately equal, after inverse reprojection, the obtained xy components of the homogeneous coordinates are mapped from the interval of [-1, 1] to [0, 1] and used as UV coordinates of the $(k-1)^{th}$ frame. A scene color (SceneColor) of the $(k-1)^{th}$ frame is sampled and outputted as a color of the pixel in the $k^{th}$ frame. Otherwise, the scene color (SceneColor) of the $(k-1)^{th}$ frame is directly sampled using the UV coordinates interpolated through rasterization and used as the color of the pixel in the $k^{th}$ frame.

The foregoing process of outputting the depth and color is shown in FIG. 11. 1. Sample a scene depth texture map of a $(k-1)^{th}$ frame using UV coordinates outputted through rasterization to obtain a depth of a pixel in the $(k-1)^{th}$ frame, and reproject the depth to obtain a depth of this frame. 2. Acquire a clipping spatial position of a pixel in this frame with reference to UV coordinates of the pixel in this frame on a screen and an acquired depth, and reversely reproject the clipping spatial position back to the $(k-1)^{th}$ frame to obtain a clipping spatial position of the pixel in the $(k-1)^{th}$ frame, thereby obtaining UV coordinates of the pixel in the $(k-1)^{th}$ frame. 3. Sample, in a case that a difference of the UV coordinates before and after reverse reprojection is greater than a distance threshold, and a depth difference is less than a depth difference threshold, a scene color texture map of the $(k-1)^{th}$ frame using the UV coordinates after the reverse reprojection, and output the scene color texture map as a color of the pixel in a $k^{th}$ frame. 4. Sample, in a case that the difference of the UV coordinates before and after reverse reprojection is not greater than the threshold, and the depth difference is not less than the depth difference threshold, the scene color texture map of the $(k-1)^{th}$ frame using UV coordinates interpolated through rasterization, and use the scene color texture map as the color of the pixel in the $k^{th}$ frame. In this way, the scene color (SceneColor) texture map and the scene depth (SceneDepth) texture map of the prediction frame may be obtained.

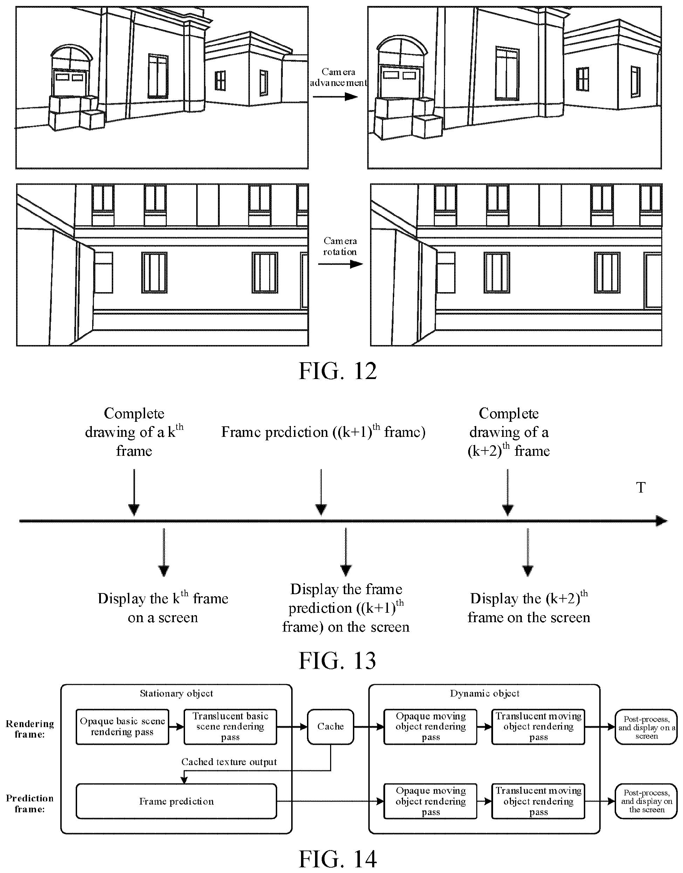

In a game process, a scene color (SceneColor) texture map outputted during frame prediction when a camera translates forward and rotates rightward is shown in FIG. 12. According to the prediction using the frame prediction technology based on screen space vertex-by-vertex reprojection proposed in this application, since a screen space aggregated mesh is still continuous after reprojection, no pixel is lost after rasterization interpolation. In addition, the frame prediction technology does not rely on any hardware and application programming interface (API) extension and may generate a prediction frame with very low overhead while maintaining high compatibility.

According to the frame prediction technology based on screen space vertex-by-vertex reprojection provided in this application, a static object drawing result (i.e., a scene color texture map and a scene depth texture map of a static object) of a next frame may be directly generated through prediction on a software layer according to a camera parameter and a rendering result of the static object in a previous frame, and in cooperation with a corresponding pipeline, a requirement of a high frame rate can be satisfied in most devices with relatively low power consumption overheads. Referring to an on-screen timing diagram shown in FIG. 13, since the process of generating the static object drawing result through frame prediction no longer relies on a rendering result of a next frame, each rendering frame may be immediately displayed on a screen after being drawn, without increasing additional on-screen waiting time.

Since frame prediction is only configured for predicting the static object drawing result, in the render pipeline proposed in this application, the moving object and the static object are drawn separately, and the moving object continues to be drawn after drawing or prediction generation of the static object of each frame is completed.

Based on the foregoing embodiments shown in FIG. 2, FIG. 4, or FIG. 7, in some embodiments, the acquiring, based on the second spatial position, screen space coordinates corresponding to pixels in the target triangular surface in the first image frame includes:

acquiring, based on the second spatial position, the screen space coordinates corresponding to the pixels in the target triangular surface in the first image frame through a first render pipeline.

The mapping the screen space coordinates corresponding to the pixels in the target triangular surface in the first image frame to the screen space coordinates corresponding to the pixels in the target triangular surface in the second image frame to obtain a scene depth texture map of the static object includes:

mapping, through the first render pipeline, the screen space coordinates corresponding to the pixels in the target triangular surface in the first image frame to the screen space coordinates corresponding to the pixels in the target triangular surface in the second image frame to obtain the scene depth texture map corresponding to the static object.

The drawing and rendering a moving object in the virtual scene based on the second camera parameter to obtain a scene depth texture map of the moving object includes:

drawing and rendering, through a second render pipeline, the moving object in the virtual scene based on the second camera parameter to obtain the scene depth texture map of the moving object.

The sampling, based on the UV coordinates corresponding to the pixels in the target triangular surface in the first image frame, the color values from the first scene color texture map to obtain a scene color texture map of the static object includes:

sampling, based on the UV coordinates corresponding to the pixels in the target triangular surface in the first image frame, the color values from the first scene color texture map through the first render pipeline to obtain the scene color texture map of the static object.

The drawing and rendering the moving object in the virtual scene based on the second camera parameter to obtain a scene color texture map of the moving object includes:

drawing and rendering, through the second render pipeline, the moving object in the virtual scene based on the second camera parameter to obtain the scene color texture map of the moving object.

In some embodiments, a drawing result of the moving object and a drawing result of the static object may be distinguished using a marking manner such as a stencil value, and then reprojection and track prediction are performed on the drawing result of the moving object and the drawing result of the static object. This is not limited in this embodiment of this application.

In other embodiments, the foregoing process may alternatively be performed using the same render pipeline. That is, the first render pipeline and the second render pipeline are the same render pipeline.

Frame prediction may efficiently generate the drawing result of a stationary object. This application proposes two render pipelines that adapt to frame prediction. One is a render pipeline ("paired render pipeline" for short) using "a render pipeline configured to render a rendering frame and a render pipeline configured to render a prediction frame" as a pair, and the other is a render pipeline ("intermediate frame interpolation pipeline" for short) directly interpolating an intermediate frame in a render thread.

FIG. 14 shows a basic structure of a "paired render pipeline". The "paired render pipeline" uses every two frames of the game as a pair (referred to as a "rendering frame" and a "prediction frame", respectively) and separates the drawing of a dynamic object and a stationary object into different passes. For the rendering frame, opaque and translucent objects in a scene are separately drawn in an opaque basic scene rendering pass (base pass opaque) and a translucent basic scene rendering pass (base pass translucent). After the drawing is completed, a scene color (SceneColor) texture map and a scene depth (SceneDepth) texture map at this time are cached into a cached texture (in this case, there are only stationary objects (i.e., static objects) in the cached texture). Then, opaque and translucent dynamic objects (i.e., moving objects) are continuously drawn on a render target texture (render target) through an opaque moving object rendering pass (movable pass opaque) and a translucent moving object rendering pass (movable pass translucent), and after post-processing, the render target texture is displayed on a screen. For the prediction frame, the drawing result of the stationary object is directly generated through prediction by adopting the frame prediction technology using the cached scene color (SceneColor) texture map and scene depth (SceneDepth) texture map and then outputted to the render target texture. Thereafter, the opaque and translucent dynamic objects of this frame are continuously drawn through the opaque moving object rendering pass (movable pass opaque) and the translucent moving object rendering pass (movable pass translucent), and after post-processing, the render target texture is displayed on the screen. In the "paired render pipeline", a ratio of the rendering frame to the prediction frame is 1: 1 so that an operation delay and hand feeling of a player at a high frame rate may be completely ensured while improving the performance and reducing the battery power consumption.

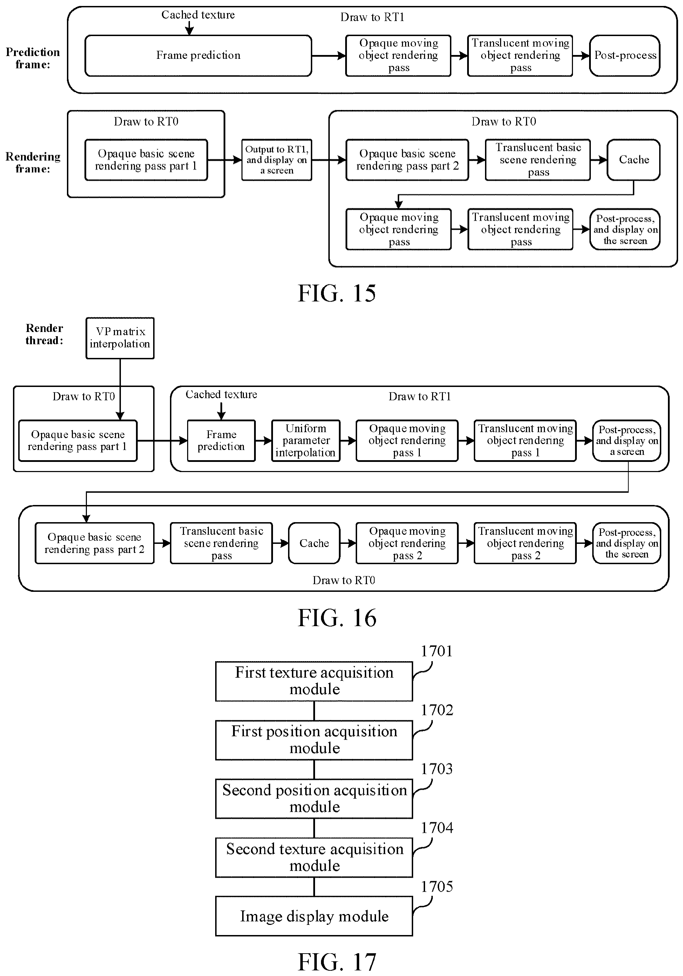

In some embodiments, the paired render pipeline is used in the foregoing method. Since the overhead of generating the static object through frame prediction is much lower than that of drawing the static object, uneven loads of the rendering frame and the prediction frame may be caused. Consequently, the GPU underlying driver load estimation error and frequency reduction occurs, resulting in frame rate reduction. Since the GPU driver of a mobile device distinguishes two GPU frames using on-screen invoking as a boundary, to make the GPU load more balanced, this application proposes a basic structure of a "paired render pipeline" shown in FIG. 15. For the prediction frame, a drawing result of a stationary object and a drawing result of a moving object that are obtained through frame prediction are outputted to a render target texture 1 (i.e., RT1), and the prediction frame is not displayed on a screen temporarily after the frame prediction ends. For the rendering frame, the opaque basic scene rendering pass (base pass opaque) is divided into two parts (which are Part1 and Part2, respectively). At the beginning, an output of Part1 is first drawn to a render target texture 0 (i.e., RT0), and then the drawing result of the prediction frame, i.e., the render target texture 1 (i.e., RT1) is displayed on the screen. After being displayed on the screen, remaining drawing of the rendering frame continues to be completed on the render target texture 0 (i.e., RT0), and then the drawing result is displayed on the screen (that is, an output of Part2 is drawn to the render target texture 0). In this way, the GPU load may be balanced through the number of drawing objects corresponding to two parts (Part1 and Part2) of the opaque basic scene rendering pass (base pass opaque).

In some embodiments, if a game is insensitive to a response time inputted by a player and has a requirement of further reducing the performance overheads, this application further provides a render pipeline ("intermediate frame interpolation pipeline" for short) directly interpolating an intermediate frame in a render thread shown in FIG. 16. When the render thread starts, drawing of a first part (Part1) of an opaque basic scene rendering pass (base pass opaque) is first completed so that parameters such as a camera matrix of the "intermediate frame" are interpolated using camera parameters of a previous frame and this frame, and then drawing results (for example, the second scene color texture map and the second scene depth texture map) of all scene objects corresponding to the "intermediate frame" are generated through the frame prediction technology using an interpolated VP matrix and a scene color (SceneColor) texture map and a scene depth (SceneDepth) texture map that are cached in the previous frame.

Then, motion parameter matrixes of all moving objects are interpolated. In this case, two uniform buffers may be used for all the moving objects. During drawing through a moving object rendering pass 1 (moveable pass 1), a uniform buffer 1 containing an interpolation parameter is used, and a uniform buffer 2 directly using a game logic output parameter is used in the following moving object rendering pass 2 (moveable pass 2).

After drawing is completed through the moving object rendering pass 1 (moveable pass 1) using the parameter of the interpolated intermediate frame, post-processing is performed once, and the intermediate frame is displayed on the screen.

Thereafter, the scene object continues to be drawn and cached through a second part of the opaque basic scene rendering pass (base pass opaque part2) and the translucent basic scene rendering pass (base pass translucent), and then the drawing is completed using the uniform buffer 2 through the moving object rendering pass 2 (moveable pass 2). Post-processing is performed, and the scene object is displayed on the screen.

Although such a high-frame-rate implementation cannot shorten the response time inputted by the player to improve the operation feeling, camera motion and sliding screen rotation may be very close to an effect of high-frame-rate rendering, and the game logic does not need to be modified. For example, in this case, if a logic frame rate is determined as 60 Hz, an image effect of camera motion may be very close to an effect of 120 Hz, but most code logic runs at 60 Hz. Therefore, the screen frame rate and image fluency can be greatly improved with very low overheads.

After testing, performance data of an original pipeline, a paired render pipeline, and an intermediate frame interpolation pipeline used in the frame prediction technology and the matching render pipeline mentioned in this application on a device equipped with a chip is shown in Table 1 below. Due to frame prediction, drawing of a stationary object (static object) is reduced every two frames. Compared with the original pipeline, a frame rate of the paired render pipeline increases by 23.7%, and the power consumption decreases by 9.38%. However, in the intermediate frame interpolation pipeline, since a frame rate of a game prediction frame is only half of a frame rate of a screen frame (rendering frame) in this case, the CPU overhead is further reduced. In this case, compared with the original pipeline, the frame rate of the intermediate frame interpolation pipeline increases by 30.7%, and the power consumption decreases by 15.78%.

Table 1

| Pipeline type | Average screen frame rate (FPS) | Average power consumption [mW] | Average CPU occupation |
|---|---|---|---|
| Original pipeline | 66.05 | 6629.33 | 38.4% |
| Paired render pipeline | 81.71 | 6007.28 | 30.5% |
| Intermediate frame interpolation pipeline | 86.31 | 5583.47 | 23.0% |

On another device, performance data obtained by testing when 90 FPS is limited is shown in Table 2 below. Average screen frame rates using the original pipeline, the paired render pipeline, and the intermediate frame interpolation pipeline are approximately equal. Compared with the original pipeline, the power consumption of the paired render pipeline decreases by about 11%, and the power consumption of the intermediate frame interpolation pipeline decreases by about 21%.

Table 2

| Pipeline type | Average screen frame rate (FPS) | Average power consumption [mW] | Average CPU occupation |
|---|---|---|---|
| Original pipeline | 88.29 | 4634.16 | 34.2% |
| Paired render pipeline | 88.33 | 4134.99 | 31.0% |
| Intermediate frame interpolation pipeline | 89.56 | 3662.93 | 25.1% |

In some embodiments, the technical solutions provided in this application are applied to the target application program. If three modes, i.e., 90 frames, 120 frames, and 144 frames are set for the number of frames, in response to the player selecting these frame rates in a setting panel of a game, the render pipeline of the target application program automatically switches to a high-frame-rate render pipeline based on frame prediction. After the high-frame-rate render pipeline is enabled, the number of frames of a game at a high frame rate may be effectively improved, the battery power consumption is reduced, and heat generation of a mobile phone is reduced, thereby providing a better game experience for the player.

FIG. 17 is a block diagram of an image display apparatus for a virtual scene according to an embodiment of this application. The apparatus includes:

a first texture acquisition module 1701 configured to acquire a first scene depth texture map and a first scene color texture map of a first image frame, the first image frame being generated by rendering the virtual scene;

a first position acquisition module 1702 configured to acquire, based on the first scene depth texture map, a first spatial position of a vertex of a target triangular surface in a first clipping space, the target triangular surface being a triangular surface of a first scene object in the first image frame, and the first clipping space corresponding to a first camera parameter of the first image frame;

a second position acquisition module 1703 configured to map, based on the first camera parameter and a second camera parameter, the first spatial position to a second spatial position in a second clipping space, the second clipping space corresponding to the second camera parameter;

a second texture acquisition module 1704 configured to generate a second scene depth texture map and a second scene color texture map based on the second spatial position and the first scene color texture map; and

an image display module 1705 configured to display a second image frame based on the second scene depth texture map and the second scene color texture map.

In some embodiments, the first position acquisition module 1702 is configured to:

determine, for each image tile corresponding to the first scene object in the first scene depth texture map, a pixel with a largest gradient change in the image tile to obtain a pixel corresponding to the vertex of the target triangular surface in the first scene depth texture map; and

acquire, based on the pixel corresponding to the vertex of the target triangular surface in the first scene depth texture map, a vertex spatial position and vertex UV coordinates that correspond to the vertex of the target triangular surface in the first clipping space,

where the first spatial position includes the vertex spatial position and the vertex UV coordinates that correspond to the vertex of the target triangular surface in the first clipping space, the vertex spatial position refers to a spatial position of the vertex, and the vertex UV coordinates refer to UV coordinates of the vertex.

In some embodiments, the first position acquisition module 1702 is further configured to acquire a spatial position and UV coordinates of the pixel corresponding to the vertex of the target triangular surface in the first scene depth texture map in the first clipping space as the vertex spatial position and the vertex UV coordinates that correspond to the vertex of the target triangular surface in the first clipping space.

In some embodiments, the first position acquisition module 1702 is further configured to:

acquire a foreground pixel and a background pixel that correspond to the vertex of the target triangular surface in the first scene depth texture map, where the foreground pixel refers to a pixel with a smallest depth among pixels within a target range, the background pixel refers to a pixel with a largest depth among the pixels within the target range, and the target range is determined based on a position corresponding to the vertex of the target triangular surface in the first scene depth texture map;

map, based on the first camera parameter and the second camera parameter, a spatial position of the foreground pixel in the first clipping space and a spatial position of the background pixel in the first clipping space to the second clipping space to obtain a spatial position of the foreground pixel in the second clipping space and a spatial position of the background pixel in the second clipping space;

use, in a case that a distance between the spatial position of the foreground pixel in the second clipping space and the spatial position of the background pixel in the second clipping space is greater than a distance threshold, the spatial position of the foreground pixel in the second clipping space and UV coordinates of the background pixel as a vertex spatial position and vertex UV coordinates that correspond to the vertex of the target triangular surface in the second clipping space; and

use, in a case that the distance between the spatial position of the foreground pixel in the second clipping space and the spatial position of the background pixel in the second clipping space is not greater than the distance threshold, the spatial position and UV coordinates of the foreground pixel in the second clipping space as the vertex spatial position and the vertex UV coordinates that correspond to the vertex of the target triangular surface in the second clipping space,

where the second spatial position includes the vertex spatial position and the vertex UV coordinates that correspond to the vertex of the target triangular surface in the second clipping space.

In some embodiments, the first position acquisition module 1702 is further configured to acquire a sum of squares of gradient differences of each pixel in the image tile on two coordinate components as a gradient change value at each pixel in the image tile, where the two coordinate components are two components in a UV coordinate system of the first scene depth texture map.

In some embodiments, the first position acquisition module 1702 is further configured to calculate, for each pixel in the image tile, based on a difference between a depth of a right pixel of the pixel and a depth of the pixel and a difference between a depth of a lower pixel of the pixel and the depth of the pixel, a sum of squares of gradient differences of the pixel on the two coordinate components as a gradient change value at the pixel.

In some embodiments, the second texture acquisition module 1704 is configured to:

acquire, based on the second spatial position, screen space coordinates corresponding to pixels in the target triangular surface in the first image frame, the screen space coordinates including UV coordinates and depth values;

map the screen space coordinates corresponding to the pixels in the target triangular surface in the first image frame to screen space coordinates corresponding to the pixels in the target triangular surface in the second image frame to obtain the second scene depth texture map; and

sample, based on the UV coordinates corresponding to the pixels in the target triangular surface in the first image frame, color values from the first scene color texture map to obtain the second scene color texture map.

In some embodiments, the second texture acquisition module 1704 is configured to:

reversely remap spatial positions of the pixels in the target triangular surface in the second clipping space back to the first clipping space to obtain reversely remapped positions of the pixels in the target triangular surface in the first clipping space;

acquire reversely remapped UV coordinates and reversely remapped depths of the pixels in the target triangular surface based on the reversely remapped positions of the pixels in the target triangular surface in the first clipping space; and

sample, based on the reversely remapped UV coordinates and reversely remapped depths of the pixels in the target triangular surface, the color values from the first scene color texture map to obtain the second scene color texture map,

where in a case that a difference between a reversely remapped depth of a first pixel and a depth of the first pixel sampled from the first depth color texture map is less than a depth difference threshold, the color value is sampled from the first scene color texture map using reversely remapped UV coordinates of the first pixel and used as a color value of the first pixel in the second scene color texture map; the first pixel is any one of the pixels in the target triangular surface; and

in a case that the difference between the reversely remapped depth of the first pixel and the depth of the first pixel sampled from the first depth color texture map is not less than the depth difference threshold, the color value is sampled from the first scene color texture map using UV coordinates of a vertex corresponding to the first pixel in the first image frame and used as the color value of the first pixel in the second scene color texture map.

In some embodiments, the first scene object includes a static object that is displayed in the first image frame and static in the virtual scene; or the first scene object includes all scene objects displayed in the first image frame.
In some embodiments, the second texture acquisition module 1704 is further configured to:

map, in a case that the first scene object includes the static object, the screen space coordinates corresponding to the pixels in the target triangular surface in the first image frame to the screen space coordinates corresponding to the pixels in the target triangular surface in the second image frame to obtain a scene depth texture map of the static object;

draw and render a moving object in the virtual scene based on the second camera parameter to obtain a scene depth texture map of the moving object;

acquire the second scene depth texture map based on the scene depth texture map of the static object and the scene depth texture map of the moving object;

sample, based on the UV coordinates corresponding to the pixels in the target triangular surface in the first image frame, the color values from the first scene color texture map to obtain a scene color texture map of the static object;

draw and render the moving object in the virtual scene based on the second camera parameter to obtain a scene color texture map of the moving object; and

acquire the second scene color texture map based on the scene color texture map of the static object and the scene color texture map of the moving object.

In some embodiments, the second texture acquisition module 1704 is further configured to:

acquire, based on the second spatial position, the screen space coordinates corresponding to the pixels in the target triangular surface in the first image frame through a first render pipeline;

map, through the first render pipeline, the screen space coordinates corresponding to the pixels in the target triangular surface in the first image frame to the screen space coordinates corresponding to the pixels in the target triangular surface in the second image frame to obtain the scene depth texture map of the static object;

draw and render, through a second render pipeline, the moving object in the virtual scene based on the second camera parameter to obtain the scene depth texture map of the moving object;

sample, based on the UV coordinates corresponding to the pixels in the target triangular surface in the first image frame, the color values from the first scene color texture map through the first render pipeline to obtain the scene color texture map of the static object; and

draw and render, through the second render pipeline, the moving object in the virtual scene based on the second camera parameter to obtain the scene color texture map of the moving object.

In summary, according to the solutions shown in the embodiments of this application, the first scene depth texture map and the first scene color texture map (i.e., a rendering result) of the first image frame are acquired, a first spatial position of a vertex of a triangular surface of a target scene object in the first image frame in the first clipping space may be acquired based on the first scene depth texture map, the first spatial position is mapped to the second spatial position based on the first spatial position, the first camera parameter corresponding to the first image frame, and the second camera parameter, and then the second scene depth texture map and the second scene color texture map of the second image frame are generated based on the second spatial position and the first scene color texture map to display the second image frame. In the foregoing solution, after the first image frame of the virtual scene is drawn, for the first scene object in the first image frame, a pixel position, depth, and color that correspond to the first scene object in the second image frame may be obtained through space mapping and camera parameter-based prediction. The second image frame does not need to be redrawn and rendered for the first scene object, thereby greatly reducing the workload of drawing and rendering the second image frame, and further reducing processing resources occupied by the image display of the virtual scene. In addition, before a new image frame after the first image frame is rendered, the acquired second image frame may be directly rendered. There is no need to wait for a rendering result of the new image frame to acquire and render the second image frame, thereby effectively improving an image display frame rate for the virtual scene, and further improving the display effect of the virtual scene.

When the apparatus provided in the foregoing embodiments implements functions of the apparatus, division of the foregoing various functional modules is merely used as an example for description. In actual application, the foregoing functions may be allocated to and completed by different functional modules according to actual requirements, that is, a content structure of a device is divided into different functional modules to complete all or some of the functions described above.

Specific manners in which the modules in the apparatus in the foregoing embodiments perform operations have been described in detail in the embodiments related to the method. Technical effects obtained by performing operations by the modules are the same as the technical effects in the embodiments related to the method, and will not be described in detail herein.

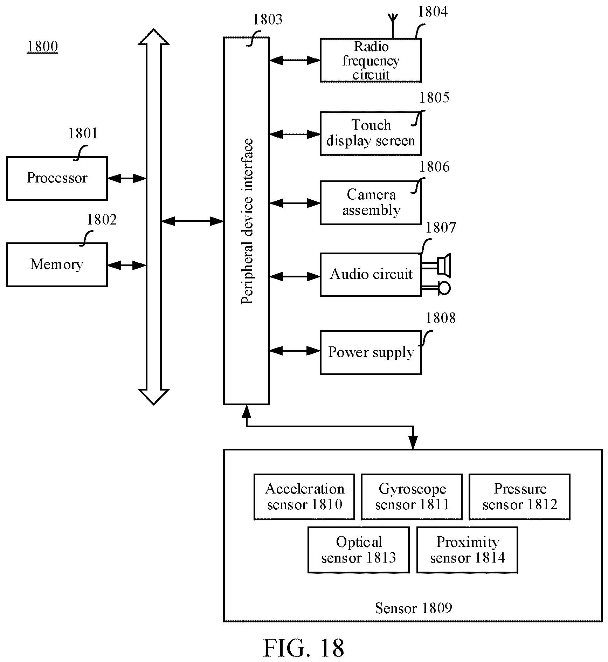

FIG. 18 is a structural block diagram of a computer device 1800 according to an embodiment of this application. The computer device 1800 may be a portable mobile terminal, such as a smartphone and a tablet computer. The computer device 1800 may alternatively be referred to as a user device, a portable terminal, or the like

Generally, the computer device 1800 includes: a processor 1801 and a memory 1802.

The processor 1801 may include one or more processing cores, for example, a 4-core processor or an 8-core processor. The processor 1801 may be implemented in at least one hardware form of digital signal processing (DSP), a field programmable gate array (FPGA), and a programmable logic array (PLA). The processor 1801 may further include a main processor and a coprocessor. The main processor is a processor configured to process data in an awake status and is alternatively referred to as a CPU. The coprocessor is a low-power-consumption processor configured to process data in a standby state. In some embodiments, the processor 1801 may be integrated with a GPU. The GPU is configured to render and draw content that needs to be displayed on a display screen. In some embodiments, the processor 1801 may further include an artificial intelligence (AI) processor. The AI processor is configured to process computing operations related to machine learning.

The memory 1802 may include one or more computer-readable storage media. The computer-readable storage media may be tangible and non-transient. The memory 1802 may further include a high-speed random access memory and a nonvolatile memory, for example, one or more disk storage devices or flash storage devices. In some embodiments, a non-transient computer-readable storage medium in the memory 1802 is configured to store at least one instruction, and the at least one instruction is executed by the processor 1801 to implement the image display method for a virtual scene provided in the embodiments of this application.

In some embodiments, the computer device 1800 may alternatively include: a peripheral device interface 1803 and at least one peripheral device. Specifically, the peripheral device includes: at least one of a radio frequency circuit 1804, a touch display screen 1805, a camera 1806, an audio circuit 1807, and a power supply 1808.

In some embodiments, the computer device 1800 further includes one or more sensors 1809. The one or more sensors 1809 include, but are not limited to, an acceleration sensor 1810, a gyroscope sensor 1811, a pressure sensor 1812, an optical sensor 1813, and a proximity sensor 1814.

A person skilled in the art may understand that the foregoing structures do not constitute a limitation on the computer device 1800, and the computer device 1800 may include more components or fewer assemblies than those shown in the figure, or some assemblies may be combined, or a different assembly deployment may be used.

In an exemplary embodiment, a chip is further provided. The chip includes a programmable logic circuit and/or program instruction. When running on a computer device, the chip is configured to implement the foregoing image display method for a virtual scene.

In an exemplary embodiment, a computer program product is further provided. The computer program product includes computer instructions, and the computer instructions are stored in a computer-readable storage medium. A processor of a computer device reads the computer instructions from the computer-readable storage medium. The processor reads and executes the computer instructions from the computer-readable storage medium to implement the foregoing image display method for a virtual scene.

In an exemplary embodiment, a computer-readable storage medium is further provided, having a computer program stored herein. The computer program is loaded and executed by a processor to implement the foregoing image display method for a virtual scene.

A person skilled in the art may understand that all or some of the operations of the foregoing embodiments may be implemented by hardware, or may be implemented by a program instructing relevant hardware. The program may be stored in a computer-readable storage medium. The above-mentioned storage medium may be a read-only memory, a magnetic disk, an optical disc, or the like.

A person skilled in the art may be aware that in the foregoing one or more examples, the functions described in the embodiments of this application may be implemented using hardware, software, firmware, or any combination thereof. When implemented using software, the functions may be stored in a computer-readable medium or may be used as one or more instructions or code in the computer-readable medium for transmission. The computer-readable medium includes a computer storage medium and a communication medium. The communication medium includes any medium that enables a computer program to be transmitted from one place to another. The storage medium may be any available medium accessible to a general-purpose or dedicated computer.

The foregoing descriptions are merely exemplary embodiments of this application, but are not intended to limit this application. Any modification, equivalent replacement, or improvement made within the spirit and principle of this application shall fall within the protection scope of this application.

**Claims**

1. An image display method for a virtual scene, performed by a computer device, and comprising:

   acquiring a first scene depth texture map and a first scene color texture map of a first image frame, the first image frame being generated by rendering the virtual scene;
   acquiring, based on the first scene depth texture map, a first spatial position of a vertex of a target triangular surface in a first clipping space, the target triangular surface being a triangular surface of a first scene object in the first image frame, and the first clipping space corresponding to a first camera parameter of the first image frame;
   mapping, based on the first camera parameter and a second camera parameter, the first spatial position to a second spatial position in a second clipping space, the second clipping space corresponding to the second camera parameter;
   generating a second scene depth texture map and a second scene color texture map based on the second spatial position and the first scene color texture map; and
   displaying a second image frame based on the second scene depth texture map and the second scene color texture map.

2. The method according to claim 1, wherein the acquiring, based on the first scene depth texture map, a first spatial position of a vertex of a target triangular surface in a first clipping space comprises:

   determining, for each image tile corresponding to the first scene object in the first scene depth texture map, a pixel with a largest gradient change in the image tile to obtain a pixel corresponding to the vertex of the target triangular surface in the first scene depth texture map; and

acquiring, based on the pixel corresponding to the vertex of the target triangular surface in the first scene depth texture map, a vertex spatial position and vertex UV coordinates that correspond to the vertex of the target triangular surface in the first clipping space,

wherein the first spatial position comprises the vertex spatial position and the vertex UV coordinates that correspond to the vertex of the target triangular surface in the first clipping space, the vertex spatial position refers to a spatial position of the vertex, and the vertex UV coordinates refer to UV coordinates of the vertex.

3. The method according to claim 2, wherein the acquiring, based on the pixel corresponding to the vertex of the target triangular surface in the first scene depth texture map, a vertex spatial position and vertex UV coordinates that correspond to the vertex of the target triangular surface in the first clipping space comprises:

acquiring a spatial position and UV coordinates of the pixel corresponding to the vertex of the target triangular surface in the first scene depth texture map in the first clipping space as the vertex spatial position and the vertex UV coordinates that correspond to the vertex of the target triangular surface in the first clipping space.

4. The method according to any one of claims 2 to 3, wherein the mapping, based on the first camera parameter and a second camera parameter, the first spatial position to a second spatial position in a second clipping space comprises:

acquiring a foreground pixel and a background pixel that correspond to the vertex of the target triangular surface in the first scene depth texture map, wherein the foreground pixel refers to a pixel with a smallest depth among pixels within a target range, the background pixel refers to a pixel with a largest depth among the pixels within the target range, and the target range is determined based on a position corresponding to the vertex of the target triangular surface in the first scene depth texture map;

mapping, based on the first camera parameter and the second camera parameter, a spatial position of the foreground pixel in the first clipping space and a spatial position of the background pixel in the first clipping space to the second clipping space to obtain a spatial position of the foreground pixel in the second clipping space and a spatial position of the background pixel in the second clipping space;

using, in a case that a distance between the spatial position of the foreground pixel in the second clipping space and the spatial position of the background pixel in the second clipping space is greater than a distance threshold, the spatial position of the foreground pixel in the second clipping space and UV coordinates of the background pixel as a vertex spatial position and vertex UV coordinates that correspond to the vertex of the target triangular surface in the second clipping space; and

using, in a case that the distance between the spatial position of the foreground pixel in the second clipping space and the spatial position of the background pixel in the second clipping space is not greater than the distance threshold, the spatial position and UV coordinates of the foreground pixel in the second clipping space as the vertex spatial position and the vertex UV coordinates that correspond to the vertex of the target triangular surface in the second clipping space,

wherein the second spatial position comprises the vertex spatial position and the vertex UV coordinates that correspond to the vertex of the target triangular surface in the second clipping space.

5. The method according to any one of claims 2 to 4, wherein before the determining a pixel with a largest gradient change in the image tile to obtain a pixel corresponding to the vertex of the target triangular surface in the first scene depth texture map, the method further comprises:

acquiring a sum of squares of gradient differences of each pixel in the image tile on two coordinate components as a gradient change value at each pixel in the image tile,

wherein the two coordinate components are two components in a UV coordinate system of the first scene depth texture map.

6. The method according to claim 5, wherein the acquiring a sum of squares of gradient differences of each pixel in the image tile on two coordinate components as a gradient change value at each pixel in the image tile comprises:

calculating, for each pixel in the image tile, based on a difference between a depth of a right pixel of the pixel and a depth of the pixel and a difference between a depth of a lower pixel of the pixel and the depth of the pixel, a sum of squares of gradient differences of the pixel on the two coordinate components as a gradient change value at the pixel.

7. The method according to any one of claims 1 to 6, wherein the generating a second scene depth texture map and a second scene color texture map based on the second spatial position and the first scene color texture map comprises:

acquiring, based on the second spatial position, screen space coordinates corresponding to pixels in the target triangular surface in the first image frame, the screen space coordinates comprising UV coordinates and depth values;

mapping the screen space coordinates corresponding to the pixels in the target triangular surface in the first image frame to screen space coordinates corresponding to the pixels in the target triangular surface in the second image frame to obtain the second scene depth texture map; and

sampling, based on the UV coordinates corresponding to the pixels in the target triangular surface in the first image frame, color values from the first scene color texture map to obtain the second scene color texture map.

8. The method according to claim 7, wherein the sampling, based on the UV coordinates corresponding to the pixels in the target triangular surface in the first image frame, color values from the first scene color texture map to obtain the second scene color texture map comprises:

reversely remapping spatial positions of the pixels in the target triangular surface in the second clipping space back to the first clipping space to obtain reversely remapped positions of the pixels in the target triangular surface in the first clipping space;

acquiring reversely remapped UV coordinates and reversely remapped depths of the pixels in the target triangular surface based on the reversely remapped positions of the pixels in the target triangular surface in the first clipping space; and

sampling, based on the reversely remapped UV coordinates and reversely remapped depths of the pixels in the target triangular surface, the color values from the first scene color texture map to obtain the second scene color texture map,

wherein in a case that a difference between a reversely remapped depth of a first pixel and a depth of the first pixel sampled from the first depth color texture map is less than a depth difference threshold, the color value is sampled from the first scene color texture map using reversely remapped UV coordinates of the first pixel and used as a color value of the first pixel in the second scene color texture map; the first pixel is any one of the pixels in the target triangular surface; and

in a case that the difference between the reversely remapped depth of the first pixel and the depth of the first pixel sampled from the first depth color texture map is not less than the depth difference threshold, the color value is sampled from the first scene color texture map using UV coordinates of a vertex corresponding to the first pixel in the first image frame and used as the color value of the first pixel in the second scene color texture map.

9. The method according to claim 7 or 8, wherein

the first scene object comprises a static object that is displayed in the first image frame and static in the virtual scene;

or

the first scene object comprises all scene objects displayed in the first image frame.

10. The method according to claim 9, wherein the mapping the screen space coordinates corresponding to the pixels in the target triangular surface in the first image frame to screen space coordinates corresponding to the pixels in the target triangular surface in the second image frame to obtain the second scene depth texture map comprises:

mapping, in a case that the first scene object comprises the static object, the screen space coordinates corresponding to the pixels in the target triangular surface in the first image frame to the screen space coordinates corresponding to the pixels in the target triangular surface in the second image frame to obtain a scene depth texture map of the static object;

rendering a moving object in the virtual scene based on the second camera parameter to obtain a scene depth texture map of the moving object; and

acquiring the second scene depth texture map based on the scene depth texture map of the static object and the scene depth texture map of the moving object; and

the sampling, based on the UV coordinates corresponding to the pixels in the target triangular surface in the first image frame, color values from the first scene color texture map to obtain the second scene color texture map comprises:

sampling, in a case that the first scene object comprises the static object, based on the UV coordinates corresponding to the pixels in the target triangular surface in the first image frame, the color values from the first scene color texture map to obtain a scene color texture map of the static object;

rendering the moving object in the virtual scene based on the second camera parameter to obtain a scene color texture map of the moving object; and

acquiring the second scene color texture map based on the scene color texture map of the static object and the scene color texture map of the moving object.

11. The method according to claim 10, wherein the acquiring, based on the second spatial position, screen space coordinates corresponding to pixels in the target triangular surface in the first image frame comprises:

acquiring, based on the second spatial position, the screen space coordinates corresponding to the pixels in the target triangular surface in the first image frame through a first render pipeline; and

the mapping the screen space coordinates corresponding to the pixels in the target triangular surface in the first image frame to the screen space coordinates corresponding to the pixels in the target triangular surface in the second image frame to obtain a scene depth texture map of the static object comprises:

mapping, through the first render pipeline, the screen space coordinates corresponding to the pixels in the target triangular surface in the first image frame to the screen space coordinates corresponding to the pixels in the target triangular surface in the second image frame to obtain the scene depth texture map of the static object; and

the rendering a moving object in the virtual scene based on the second camera parameter to obtain a scene depth texture map of the moving object comprises:

rendering, through a second render pipeline, the moving object in the virtual scene based on the second camera parameter to obtain the scene depth texture map of the moving object; and

the sampling, based on the UV coordinates corresponding to the pixels in the target triangular surface in the first image frame, the color values from the first scene color texture map to obtain a scene color texture map of the static object comprises:

sampling, based on the UV coordinates corresponding to the pixels in the target triangular surface in the first image frame, the color values from the first scene color texture map through the first render pipeline to obtain the scene color texture map of the static object; and

the rendering the moving object in the virtual scene based on the second camera parameter to obtain a scene color texture map of the moving object comprises:

rendering, through the second render pipeline, the moving object in the virtual scene based on the second camera parameter to obtain the scene color texture map of the moving object.

12. An image display apparatus for a virtual scene, comprising:

a first texture acquisition module configured to acquire a first scene depth texture map and a first scene color texture map of a first image frame, the first image frame being generated by rendering the virtual scene;

a first position acquisition module configured to acquire, based on the first scene depth texture map, a first spatial position of a vertex of a target triangular surface in a first clipping space, the target triangular surface being a triangular surface of a first scene object in the first image frame, and the first clipping space corresponding to a first camera parameter of the first image frame;

a second position acquisition module configured to map, based on the first camera parameter and a second camera parameter, the first spatial position to a second spatial position in a second clipping space, the second clipping space corresponding to the second camera parameter;

a second texture acquisition module configured to generate a second scene depth texture map and a second scene color texture map based on the second spatial position and the first scene color texture map; and

an image display module configured to display a second image frame based on the second scene depth texture map and the second scene color texture map.

13. A computer device, comprising a processor and a memory, the memory having at least one computer instruction stored therein, and the at least one computer instruction being loaded and executed by the processor to implement the image display method for a virtual scene according to any one of claims 1 to 11.

14. A computer-readable storage medium, having at least one computer instruction stored therein, and the computer instruction being loaded and executed by a processor to implement the image display method for a virtual scene according to any one of claims 1 to 11.

15. A computer program product, comprising computer instructions, the computer instructions being stored in a computer-readable storage medium; and the computer instructions being read and executed by a processor of a computer device to implement the image display method for a virtual scene according to any one of claims 1 to 11.

Computer system 100

Server 120

User account database 123 ↔ Processor 122 ↔ Battle service module 124

User-oriented I/O interface 125

Wireless network or wired network

Another terminal 140

110

130

Client 111 supporting virtual environment

Client 131 supporting virtual environment

FIG. 1

210

Acquire a first scene depth texture map and a first scene color texture map of a first image frame, the first image frame being an image frame generated by drawing and rendering a virtual scene

220

Acquire, based on the first scene depth texture map, a first spatial position of a vertex of a target triangular surface in a first clipping space, the target triangular surface being a triangular surface of a first scene object in the first image frame, and the first clipping space being a clipping space corresponding to a first camera parameter of the first image frame

230

Map, based on the first camera parameter and a second camera parameter, the first spatial position to a second spatial position in a second clipping space, the second clipping space being a clipping space corresponding to the second camera parameter

240

Generate a second scene depth texture map and a second scene color texture map based on the second spatial position and the first scene color texture map

250

Display the second image frame based on the second scene depth texture map and the second scene color texture map

FIG. 2

FIG. 3

210

Acquire a first scene depth texture map and a first scene color texture map of a first image frame, the first image frame being an image frame generated by drawing and rendering a virtual scene

220a

Determine, for each image tile corresponding to a first scene object in the first scene depth texture map, a pixel with a largest gradient change in the image tile to obtain a pixel corresponding to a vertex of a target triangular surface in the first scene depth texture map

220b

Acquire, based on the pixel corresponding to the vertex of the target triangular surface in the first scene depth texture map, a vertex spatial position and vertex UV coordinates that correspond to the vertex of the target triangular surface in a first clipping space

230

Map, based on a first camera parameter and a second camera parameter, a first spatial position to a second spatial position in a second clipping space, the second clipping space being a clipping space corresponding to the second camera parameter

240

Generate a second scene depth texture map and a second scene color texture map based on the second spatial position and the first scene color texture map

250

Display a second image frame based on the second scene depth texture map and the second scene color texture map

FIG. 4

501

FIG. 5

601

FIG. 6

210

Acquire a first scene depth texture map and a first scene color texture map of a first image frame, the first image frame being an image frame generated by drawing and rendering a virtual scene

220

Acquire, based on the first scene depth texture map, a first spatial position of a vertex of a target triangular surface in a first clipping space, the target triangular surface being a triangular surface of a first scene object in the first image frame, and the first clipping space being a clipping space corresponding to a first camera parameter of the first image frame

230

Map, based on the first camera parameter and a second camera parameter, the first spatial position to a second spatial position in a second clipping space, the second clipping space being a clipping space corresponding to the second camera parameter

240a

Acquire, based on the second spatial position, screen space coordinates corresponding to pixels in the target triangle face in the first image frame, the screen space coordinates including UV coordinates and depth values

240b

Map the screen space coordinates corresponding to the pixels in the target triangular surface in the first image frame to screen space coordinates corresponding to the pixels in the target triangular surface in a second image frame to obtain a second scene depth texture map

240c

Sample, based on the UV coordinates corresponding to the pixels in the target triangular surface in the first image frame, color values from the first scene color texture map to obtain a second scene color texture map

250

Display the second image frame based on the second scene depth texture map and the second scene color texture map

FIG. 7

Sample scene depths to find a vertex

CS

Find, in each image tile, a pixel position where the vertex is most likely to exist, and output a found position to a texture after reprojection

Draw a screen space aggregated mesh

VS

PS

Sample the texture outputted by the CS to obtain a position and UV coordinates of the vertex, and keep a pixel at an edge of a screen aligned with the edge

Sample a scene depth of a $(k-1)^{th}$ frame according to the UV coordinates outputted through rasterization, and output a color and a depth of a $k^{th}$ frame after reprojection correction

## FIG. 8

1. Acquire depth values of pixels through sampling, and calculate a difference

2. A vertex is located at a pixel with a largest depth field gradient change amount, four surrounding pixels are sampled, and pixels with a smallest depth and a largest depth are selected as a foreground pixel and a background pixel, respectively

3. Reproject clipping spatial positions of the foreground pixel and the background pixel using a reprojection formula

A difference between reprojected positions of the foreground pixel and the background pixel is greater than a threshold

Yes                    No

4. Use the clipping spatial position of the foreground pixel and UV coordinates of the background pixel for the vertex

5. Use the clipping spatial position and UV coordinates of the foreground pixel for the vertex

6. Output vertex information of reprojected clipping spatial positions and UV coordinates to a texture

## FIG. 9

1. Extract a clipping spatial position and UV coordinates of a vertex from a texture outputted by a CS

No ← Whether the vertex is located at an edge of a screen → Yes

2. Use the clipping spatial position and the UV coordinates acquired from the texture outputted by the CS for the vertex

3. Modify the clipping spatial position and the UV coordinates of the vertex to keep the vertex at the edge of the screen

4. Output the clipping spatial position and the UV coordinates of the vertex to hardware, and perform rasterization through the hardware to interpolate and output a clipping spatial position and UV coordinates of a pixel through the hardware

FIG. 10

1. Sample a scene depth texture map of a $(k-1)^{th}$ frame using UV coordinates outputted through rasterization to obtain a depth of a pixel in the $(k-1)^{th}$ frame, and reproject the depth to obtain a depth of this frame

2. Acquire a clipping spatial position of a pixel in this frame with reference to UV coordinates of the pixel in this frame on a screen and an acquired depth, and reversely reproject the clipping spatial position back to the $(k-1)^{th}$ frame to obtain a clipping spatial position of the pixel in the $(k-1)^{th}$ frame, thereby obtaining UV coordinates of the pixel in the $(k-1)^{th}$ frame

Yes ← A difference of the UV coordinates before and after reverse reprojection is greater than a threshold, and a depth difference is less than a threshold → No

3. Sample a scene color of the $(k-1)^{th}$ frame using the UV coordinates after the reverse reprojection, and output the scene color as a color of the pixel in a $k^{th}$ frame

4. Sample the scene color of the $(k-1)^{th}$ frame using UV coordinates interpolated through rasterization, and use the scene color as the color of the pixel in the $k^{th}$ frame

FIG. 11

Camera
advancement

Camera
rotation

FIG. 12

Complete
drawing of a $k^{th}$
frame

Frame prediction ($(k+1)^{th}$ frame)

Complete
drawing of a
$(k+2)^{th}$ frame

T

Display the $k^{th}$ frame
on a screen

Display the frame
prediction ($(k+1)^{th}$
frame) on the screen

Display the $(k+2)^{th}$
frame on the screen

FIG. 13

FIG. 14

Prediction frame:

Cached texture

Draw to RT1

Frame prediction → Opaque moving object rendering pass → Translucent moving object rendering pass → Post-process

Rendering frame:

Draw to RT0

Opaque basic scene rendering pass part 1 → Output to RT1, and display on a screen →

Draw to RT0

Opaque basic scene rendering pass part 2 → Translucent basic scene rendering pass → Cache

Opaque moving object rendering pass → Translucent moving object rendering pass → Post-process, and display on the screen

**FIG. 15**

Render thread: VP matrix interpolation

Draw to RT0

Opaque basic scene rendering pass part 1 →

Cached texture    Draw to RT1

Frame prediction → Uniform parameter interpolation → Opaque moving object rendering pass 1 → Translucent moving object rendering pass 1 → Post-process, and display on a screen

Opaque basic scene rendering pass part 2 → Translucent basic scene rendering pass → Cache → Opaque moving object rendering pass 2 → Translucent moving object rendering pass 2 → Post-process, and display on the screen

Draw to RT0

**FIG. 16**

First texture acquisition module ⟩ 1701

First position acquisition module ⟩ 1702

Second position acquisition module ⟩ 1703

Second texture acquisition module ⟩ 1704

Image display module ⟩ 1705

**FIG. 17**

EP 4 660 954 A1

1800

1801 Processor

1802 Memory

1803 Peripheral device interface

1804 Radio frequency circuit

1805 Touch display screen

1806 Camera assembly

1807 Audio circuit

1808 Power supply

Acceleration sensor 1810  Gyroscope sensor 1811  Pressure sensor 1812

Optical sensor 1813  Proximity sensor 1814

Sensor 1809

FIG. 18

## INTERNATIONAL SEARCH REPORT

| International application No. |
| --- |
| **PCT/CN2024/094298** |

### A. CLASSIFICATION OF SUBJECT MATTER

G06T 15/00(2011.01)i

According to International Patent Classification (IPC) or to both national classification and IPC

### B. FIELDS SEARCHED

Minimum documentation searched (classification system followed by classification symbols)

IPC: G06T, H04N

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, CNKI, IEEE, ISI: 虚拟, 场景, 图像, 深度, 颜色, 纹理图, 三角面, 顶点, 空间, 位置, 映射, 相机, 参数, 帧, 梯度, 像素点, virtual, scene, image, depth, color, texture, triangle, vertex, space, position, mapping, camera, parameter, frame, gradient, pixel

### C. DOCUMENTS CONSIDERED TO BE RELEVANT

| Category* | Citation of document, with indication, where appropriate, of the relevant passages | Relevant to claim No. |
| --- | --- | --- |
| Y | CN 112738495 A (ALIBABA GROUP HOLDING LTD.) 30 April 2021 (2021-04-30) claims 11-12, and description, paragraphs [0095]-[0130] | 1, 12-15 |
| Y | CN 115398907 A (HUAWEI TECHNOLOGIES CO., LTD.) 25 November 2022 (2022-11-25) description, paragraphs [0441]-[0573] | 1, 12-15 |
| A | US 2019238854 A1 (MICROSOFT TECHNOLOGY LICENSING, LLC) 01 August 2019 (2019-08-01) entire document | 1-15 |
| A | US 2018350134 A1 (VERIZON PATENT AND LICENSING INC.) 06 December 2018 (2018-12-06) entire document | 1-15 |
| A | CN 114255258 A (ALIBABA (CHINA) CO., LTD.) 29 March 2022 (2022-03-29) entire document | 1-15 |

☐ Further documents are listed in the continuation of Box C.        ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **22 July 2024** | **01 August 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/094298**

| Patent document cited in search report | | | Publication date (day/month/year) | Patent family member(s) | | | Publication date (day/month/year) |
|---|---|---|---|---|---|---|---|
| CN | 112738495 | A | 30 April 2021 | WO | 2021083174 | A1 | 06 May 2021 |
| CN | 115398907 | A | 25 November 2022 | WO | 2022068326 | A1 | 07 April 2022 |
| | | | | CN | 114708289 | A | 05 July 2022 |
| US | 2019238854 | A1 | 01 August 2019 | None | | | |
| US | 2018350134 | A1 | 06 December 2018 | JP | 2020522803 | A | 30 July 2020 |
| | | | | US | 2019385356 | A1 | 19 December 2019 |
| | | | | WO | 2018222495 | A1 | 06 December 2018 |
| | | | | KR | 20200012875 | A | 05 February 2020 |
| | | | | EP | 3631766 | A1 | 08 April 2020 |
| CN | 114255258 | A | 29 March 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310912098